# EUROPÄISCHE PATENTSCHRIFT

(11) **EP 1 099 872 B1**
(45) Veröffentlichungstag und Bekanntmachung des Hinweises auf die Patenterteilung: **22.12.2004**
(21) Anmeldenummer: 00123403.8
(22) Anmeldetag: 02.11.2000
(51) Int. Cl.: F16D 65/12

(54) **Verfahren zum Herstellen eines Reibringes, insbesondere für eine Bremsscheibe und Bremsscheibe**
Method for producing a friction ring, in particular for a brake disc, and brake disc
Procédé de fabrication d'un anneau de friction, en particulier pour disque de frein, et disque de frein

(30) Priorität: 12.11.1999 DE 19954585
(43) Veröffentlichungstag der Anmeldung: 16.05.2001
(73) Patentinhaber: KNORR-BREMSE Systeme für Schienenfahrzeuge GmbH, 80809 München (DE)
(72) Erfinder: Wirth, Xaver, Dr., 85737 Ismaning (DE)

(56) Entgegenhaltungen:
- EP-A- 0 166 879
- EP-B- 0 636 217
- DE-A- 4 308 910

## Beschreibung

Die Erfindung betrifft ein Verfahren zur Herstellung eines Reibringes, insbesondere für eine Bremsscheibe, im einzelnen mit den Merkmalen aus dem Oberbegriff des Anspruchs 1; ferner eine Bremsscheibe, insbesondere für eine Scheibenbremse für den Einsatz in Fahrzeugen, insbesondere Nutzfahrzeugen.

Bremsscheiben, insbesondere Bremsscheiben mit aus zwei Ringteilen aufgebauten Reibringen, insbesondere Achsbremsscheiben für Schienenfahrzeuge, mit zwei axial versetzten, entsprechend dem Reibring geteilten Ringkörpem und Verfahren zu deren Herstellung sind in einer Vielzahl von Ausführungen bekannt. Diesbezüglich wird stellvertretend auf die nachfolgend genannten Druckschriften verwiesen:
1. DE 43 08 910 C2
2. EP 0 166 879 B1
3. EP 0 636 217 B1

Die Druckschrift DE 43 08 910 C2 offenbart dabei eine Bremsscheibe für Scheibenbremsen mit einem einseitig von wenigstens einer Bremsbacke beaufschlagbarem Reibring, welcher aus wenigstens zwei Reibringsegmenten besteht, wobei jedes Ringsegment an einem Tragkörper gehaltert ist, mit an den Stoßstellen bzw. einander gegenüberliegenden Enden der Ringsegmente deren gegenüberstehende Enden verbindenden, zumindest radiale Relativverschiebungen der Ringsegmente ausschließenden Verbindungselementen und mit Aussparungen, die auf zumindest einer Seite des Reibringes zu dem Tragkörper hin offen sind und in Bezug auf die Stoßstellen der Ringsegmente symmetrisch angeordnet sind. Die Tiefe der Aussparungen ist geringer als die axiale Breite der Ringsegmente. Der Reibring weist des weiteren als Aussparungen die Stoßstellen überbrückend angeordnete Ringnuten auf, deren Achsen parallel zur Achse des Reibringes verlaufen, wobei in jede Ringnut ein, diese zumindest annähernd vollständig ausfüllender, die Stoßstelle überbrückender Ringkörper einsetzbar ist. Mit dieser Lösung wird verhindert, daß sich die Stoßstelle zwischen den zwei Ringsegmenten auch bei Auftreten hoher Fliehkräfte bzw. anderweitiger Kräfte aufweiten kann, und gleichzeitig relative Radialverschiebungen ausgeschlossen werden. Die Verbindungselemente sind derart ausgeführt, daß diese praktisch keinen zusätzlichen Bauraum erfordern. Allerdings ist diese Lösung hinsichtlich der Fertigung sehr kostenintensiv, da insbesondere die Ausgestaltung der Aussparungen und der Ringkörper mit einer bestimmten Genauigkeit erfolgen muß, um die Funktion zu gewährleisten. Des weiteren ist neben der Teilung eine zusätzliche aufwendige Bearbeitung der Ringsegmente erforderlich, wobei jedoch hier eine Ausführung als Gußteil ebenfalls denkbar ist, jedoch eine besondere Gußform erfordert.

Aus der Druckschrift EP 0 166 879 B1 ist eine Bremsscheibe mit geteiltem Reibring, insbesondere eine Achsbremsscheibe für Schienenfahrzeuge mit zwei axial versetzten, entsprechend dem Reibring geteilten Ringkörpern bekannt, wobei jeweils zwei aneinander axial gegenüberstehende Ringkörper durch im wesentlichen radial verlaufende Rippen miteinander verbunden sind und mit einer, die Trennfuge zwischen den Reibringteilen mit Vorspannung überbrückenden Verschraubung, wobei die einander gegenüberstehenden Stirnflächen der Reibringteile in den Bereichen der Verschraubung und ihrer seitlichen Begrenzung aneinander anliegen, in den übrigen Bereichen dagegen Abstand zueinander aufweisen. Die Ringkörper erfahren dabei mittels der Verschraubung eine sichere, keine Spalte in den Reibflächen der Bremsscheibe bewirkende Verbindung, wobei zudem ungewollte Verformungen der Ringkörper und der Aufbau überhöhter Spannungen ausgeschlossen wird. Auch diese Lösung ist durch einen hohen konstruktiven und fertigungstechnischen Aufwand charakterisiert.

Aus der Druckschrift EP 0 636 217 B1 ist eine Ausführung einer einstückigen Bremsscheibe bekannt, welche zwei Trennzonen aufweist, um diese in zwei Teile zu unterteilen. Anschließend wird an jeder Trennzone eine diese übergreifende Befestigungsvorrichtung ausgebildet und schließlich die Bremsscheibe in den Trennzonen in zwei halbkreisförmige Teile auseinandergebrochen. Dieses Verfahren ist zwar kostengünstig, da die Bremsscheibe selbst entsprechend billig hergestellt werden kann und dementsprechend kaum mehr kostet als eine herkömmliche Bremsscheibe, wobei durch die Zweiteiligkeit der Bremsscheibe der Austausch einer verschlissenen Bremsscheibe gegen eine neue Bremsscheibe wesentlich vereinfacht wird, allerdings sind auch in diesem Fall wieder entsprechende Verbindungselemente vorzusehen, die eine Relativverschiebung der Ringsegmente in radialer Richtung sowie gegeneinander verhindert. Ein weiterer wesentlicher Nachteil besteht darin, daß dieses Verfahren nur für Bremsscheiben in Betracht kommt, welche aus spröden Werkstoffen bestehen, z.B. Grauguß, und des weiteren schmale Reibringe aufweisen, damit die Biegespannungen zum Bruch führen können. Damit sind derartige Reibringe nicht für den Einsatz in Schienenfahrzeugen geeignet, da dort in der Regel nur breite Reibringe zur Anwendung gelangen. Diese lassen sich jedoch nicht brechen, höchstens zerstören. Ein weiterer Nachteil besteht in der sich ergebenden Ausgestaltung der Profilfläche. Insbesondere die Bruchzone schließt jedoch Unebenheiten in der Oberfläche des Reibringes nicht aus, so daß bei Anliegen an Belägen tiefere Verschleißzonen entstehen können, was wiederum zu einer ungleichmäßigen Abnutzung der Bremsbeläge führt.

Die in den angeführten Druckschriften beschriebenen Lösungen sind des weiteren für die Herstellung von Bremsscheiben mit geringer Breite und deren Auslegung für höhere Geschwindigkeiten nicht kostengünstig.

Der Erfindung liegt daher die Aufgabe zugrunde, eine Bremsscheibe mit einem geteilten Reibring derart weiterzuentwickeln, daß die im Stand der Technik genannten Nachteile vermieden werden. Insbesondere soll diese mit einfachen Mitteln derart ausgestaltet werden, daß sich die Stoßstelle zwischen zwei Ringsegmenten auch bei Auftreten hoher Fliehkräfte bzw. anderweitiger Kräfte nicht aufweiten kann und gleichzeitig eine Axial- und Radialverschiebung relativ zueinander ausgeschlossen wird. Durch die Verbindungselemente soll praktisch kein zusätzlicher Bauraum erforderlich sein, so daß die Bremsscheibe auch unbelüftet oder mit nur kurzen Kühlrippen ausgebildet werden kann. Des weiteren soll diese sich durch einen geringen fertigungstechnischen Aufwand und geringe Kosten auszeichnen.

Die erfindungsgemäße Lösung ist durch die Merkmale der Ansprüche 1 und 12 charakterisiert. Vorteilhafte Ausgestaltungen sind in den Unteransprüchen beschrieben.

Bei einer Bremscheibe, umfassend einen Reibring, welcher aus mindestens zwei Ringsegmenten - einem ersten Ringsegment und einem zweiten Ringsegment besteht, werden die Ringsegmente aus einem einstückigen bzw. einteiligen ringförmigen Grundkörper mittels eines mechanischen Trennverfahrens erzeugt. Erfindungsgemäß erfolgt die Trennung mittels eines Hydroschneidverfahrens, inbesondere eines Wasserstrahlschneidverfahrens, wobei die Trennfuge derart ausgeführt wird, daß die zueinander weisenden Endbereiche zweier in Umfangsrichtung einander benachbarter Ringsegmente unter Bildung eines Spaltes ineinander eingreifen. Der Bereich des Eingriffes kann dabei als Stoßbereich oder Trennbereich bezeichnet werden. Der Begriff Stoßbereich bezieht sich dabei auf das theoretisch mögliche Zusammentreffen der einander gegenüberliegenden Flächen der zwei einander benachbarten Ringsegmente unter Belastung, während diese Flächen dem Trennbereich unter dem Gesichtspunkt der Erstreckung der Trennfuge des ringförmigen Grundelementes in Umfangsrichtung zuzuordnen sind. Hinsichtlich der Erstreckung in Umfangsrichtung sind Trenn- und Stoßbereich dabei identisch. Die einzelnen entstehenden Ringsegmente, insbesondere die in Umfangsrichtung betrachtet einander benachbart angeordneten, werden im Trenn- bzw. Stoßbereich mittels wenigstens eines Verbindungselementes miteinander gekoppelt. Das Verbindungselement erstreckt sich dabei über wenigstens einen Teilbereich der radialen Erstreckung der ineinandergreifenden Endbereiche der Ringsegmente und durch diese hindurch. Dies bietet den Vorteil, daß kein zusätzlicher Bauraum für die Verbindungselemente bereitgestellt werden muß und diese auch nicht beim Anliegen des Bremsbelages am Reibring über diesen hinausragen und den Bremsbelag schädigen können.

Das Ineinandergreifen der einzelnen Ringsegmente im Stoß-bzw. Trennbereich wird dadurch realisiert, daß die Trennfuge derart gelegt wird, daß an den jeweils einander gegenüberliegenden Trennflächen der einzelnen Reibringsegmente, welche den zueinander weisenden Flächen der Endbereiche der einander benachbarten Ringsegmente entsprechen, Vorsprünge und Ausnehmungen gebildet werden, die unter Berücksichtigung des beim Hydro-, insbesondere Wasserstrahlschneidverfahren entstehenden Spaltes in dazu komplementäre Ausnehmungen am anderen gegenüberliegenden Ringsegment eingreifen bzw. einen gegenüberliegenden Vorsprung umschließen.

Das erfindungsgemäße Verfahren bietet den Vorteil der Herstellung einer Bremsscheibe, insbesondere eines Reibringes mit wenigstens zwei Ringsgmenten aus einem einstückigen Grundelement mit einer minimalen Anzahl an Verfahrensschritten, geringem Bauraumbedarf und Kosten. Das Grundelement kann dabei bereits hinsichtlich seiner Oberflächenbehandlung fertig bearbeitet sein, da nach dem Schneidvorgang keine zusätzlichen Verfahrensschritte zur Oberflächenbearbeitung, insbesondere an den durch den Schneidvorgang entstehenden Trennflächen mehr erforderllich sind, weshalb als einstückiges Grundelement auch konventionelle einstückige Reibringe Verwendung finden können.

Ein weiterer wesentlicher Vorteil besteht darin, daß der haarfeine Hydrostrahl bzw. Wasserstrahl beim Wasserstrahlschneidverfahren in der Regel nur einen minimalen Schnittspalt erzeugt, woraus ein geringer Materialverlust resultiert und somit die einzelnen Ringsegmente fast passgenau ineinander gesteckt werden können. Der Spalt, der dabei durch das Schneiden entsteht und bei Kopplung der Ringsegmente ohne Verspannung gegeneinander den Trennspalt bildet, liegt in der Regel in einem Bereich von weniger als einem Millimeter Breite, wodurch nahezu ein Anliegen der einzelnen Flächen in den Endbereichen der einzelnen Ringsegmente gewährleistet wird bzw. bei Verbindung der Ringsegmente im Normalfall keine zusätzlichen Maßnahmen zur Lagefixierung der einzelnen Elemente zueinander in radialer Richtung erforderlich sind. Bei Montage der einzelnen Ringsegmente entsteht dabei eine exakt angepaßte Verbindung, welche in der Lage ist, alle Umfangsspannungen am Reibring aufzunehmen.

Bei der Technologie des Hydroschneidens, insbesondere des Wasserstrahlschneidens, handelt es sich um eine Art der mechanischen Trennung, welche neben der Eignung für sehr komplexe Formen und Hinterschneidungen eine Bearbeitung ohne jegliche Materialdeformation und Gefügeveränderung im Randzonenbereich ermöglicht. Damit ist keine zusätzliche Oberflächenbearbeitung der Trennflächen nach dem Schneidvorgang erforderlich. Bezüglich des Anwendungsbereiches sind hinsichtlich der Art der verwendeten Werkstoffe keine Grenzen gesetzt. Es können Metalle aller Art, Aluminiumlegierungen, Buntmetalle, Glas, Verbundglas, Keramik, sämtliche Kunststoffe sowie Verbundwerkstoffe bearbeitet werden. Besonders vorteilhaft ist dabei die große Umweltverträglichkeit im Vergleich zu anderen Trennverfahren. Auch entstehen keine zusätzlichen Werkzeugkosten und nur sehr geringe Rüstkosten. Der Vorteil dieses Verfahrens besteht des weiteren darin, daß mit geringen Toleranzen selbst dicke Reibringe geschnitten werden können, wobei der Schneidvorgang umweltfreundlich und ohne thermische oder mechanische Verformung erfolgt. Komplexe Formen, insbesondere hinsichtlich der Gestaltung der Ausnehmungen und Vorsprünge sind somit auf einfache Art und Weise herstellbar. Auch sind mit diesem Trennverfahren der Anordnung der Trennstellen hinsichtlich ihres Abstandes in Umfangsrichtung zueinander und der Regelmäßigkeit bzw. Symmetrie keine Grenzen gesetzt.

Um auch sehr dünne Reibringe, bestehend aus wenigstens zwei Ringsegmenten kostengünstig fertigen zu können, wird der theoretische Stoß- bzw. Trennbereich am noch ungeteilten Grundelement verstärkt ausgeführt, damit die Verbindungselemente von diesem umschlossen werden können. Die Verstärkung wird in der Regel durch eine Materialanhäufung realisiert.

In diesem verstärkten Bereich wird in radialer Richtung eine Durchgangsöffnung, vorzugsweise in Form einer Durchgangsbohrung, eingebracht, wobei das Einbringen der Durchgangsbohrung vorzugsweise vor dem Trennvorgang erfolgt. Der Reibring kann danach bereits im fertig bearbeitetem Zustand mittels des Hydroschneidverfahrens, insbesondere des Wasserschneidverfahrens, getrennt werden.

Die zum Trennen erforderliche Energie wird beim Hydroschneidverfahren, insbesondere Wasserstrahlschneidverfahren durch einen Flüssigkeitsstrahl aufgebracht, welcher beispielsweise durch eine sehr feine Keramik- oder Edelsteindüse strömt. Bezüglich der Ausführungen der Vorrichtung zur Realisierung des Wasserstrahlsschneidverfahrens bestehen eine Vielzahl von Möglichkeiten, weshalb an dieser Stelle nur beispielhaft darauf eingegangen wird. Zur Erzeugung des feinen Wasserstrahles ist ein entsprechender Druck erforderlich. In einem Primärkreislauf wird dabei in der Regel mittels einer Hydraulikpumpe ein Ölvordruck erzeugt. Dieser wird beispielsweise mit Hilfe eines Übersetzerkolbens in einen hohen Wasserdruck in einem Sekundärkreislauf umgewandelt. Dabei erzeugt die Hochdruckpumpe im Dauerbetrieb einen Wasserdruck bis ca. 3800 bar, welcher mit ca. 2,5-facher Schallgeschwindigkeit durch die Wasserdüse im Schneidkopf durchströmt. Die potentielle Energie wird dabei in kinetische Energie umgewandelt. Dem gebündelte Wasserstrahl wird, bevor dieser auf das zu verarbeitende Material trifft, in einer Mischkammer ein Schneidmittel feinster Körnung zugeführt, wodurch eine Mikro-Zerspannung erfolgt. Dazu wird in der Mischkammer ein Unterdruck erzeugt, welcher zur Ansaugung des Abrasivmittels genutzt wird. Nach der Entnahme des Abrasivmittels aus dem Vorratsbehälter wird dieses einer Dosiereinrichtung zugeführt. Hier wird die für die aktuelle Schneidaufgabe erforderliche Abrasivmenge eingestellt. In der focusierten Düse wird dann der Abrasivstrahl erneut gebündelt und auf das Werkstück gelenkt. Dabei finden als Abrasiv vorzugsweise feinkörnige Olivin- oder Granitsande sowie Korund Verwendung. Je härter das Material des Reibringes ist, um so besser wird dann die Abtragsleistung. Die Abrasiveinheit weist dabei im wesentlichen die folgenden Komponenten auf, Abrasivschneidkopf, Abrasiv-Dosiersystem, gesteuertes Ein-/Ausventil und Abrasivbehälter für permanente Bereitstellung von mehreren verschiedenen Schneidzusätzen. Die Vernichtung der Restenergie kann dann beim Hochleistungs-Abrasivbetrieb mittels eines im Wasserbecken integrierten Energieabsorbers erfolgen.

Der mittels des erfindungsgemäßen Verfahrens hergestellte Reibring ist vorzugsweise in Bremsscheiben einsetzbar. Die Bremsscheibe, insbesondere für Scheibenbremsen, insbesondere für den Einsatz in Fahrzeugen, umfaßt dabei wenigstens einen einseitig von wenigstens einer Bremsbacke beaufschlagbaren Reibring, welcher aus wenigstens zwei Ringsegmenten - einem ersten Ringsegment und einem zweiten Ringsegment - besteht, wobei jedes Ringsegment an einem Tragkörper gehaltert ist. Erfindungsgemäß greifen die Endbereiche der einander in Umfangsrichtung benachbarten Ringsegmente unter Beibehaltung eines geringen Spaltes ineinander ein und sind mittels Verbindungsmitteln miteinander gekoppelt. Dabei können bei Ausführungen mit wenigstens zwei Ringsegmenten folgende Möglichkeiten unterschieden werden:
a) Kopplung mittels jeweils eines Verbindungselementes im Bereich der Trenn- bzw. Stoßbereiche
b) Kopplung mittels jeweils mehreren Verbindunsgelementen im Bereich der Trenn- bzw. Stoßbereiche

Werden im erstgenannten Fall die Verbindungselemente in radialer Richtung bezogen auf die Bremsscheibe angeordnet bzw. geführt, stellen diese gleichzeitig Mittel zur gelenkigen Verbindung der beiden Reibringsegmente dar, welche somit eine Scharnierverbinndung zwischen den einzelnen Reibringsegmenten ermöglichen. Die Gelenkachse ist dabei derart ausgerichtet, daß diese im wesentlichen in einer Ebene liegt, welche senkrecht zur Symmetrieachse der Bremsbacke bzw. des Reibringes verläuft. Bezüglich der Realisierung der gelenkigen Verbindung bestehen eine Vielzahl von Möglichkeiten, wobei wenigstens ein Gelenk vorgesehen ist. In diesem Fall weist dieses eine Gelenkachse auf, welche sich in radialer Richtung über wenigstens einen Teil der Erstreckung bzw. Abmessung des Reibringes in radialer Richtung erstreckt. Die Gelenkachse verläuft in diesem Fall bezogen auf die Symmetrieachse des Reibringes in radialer Richtung, wobei die Achse in einer Ebene liegt, welche senkrecht zur Symmetrieachse des Reibringes verläuft. Wesentlich dabei ist, das mittels der gelenkigen Verbindung wenigstens eine Schwenkbewegung der beiden miteinander zu koppelnden Reibringsegmente möglich ist. Bei Relativbewegungen der einzelnen Reibringsegmente gegeneinander, insbesondere bei Ausführung der Schwenkbewegung entsprechend der gelenkigen Verbindung, wie sie insbesondere beim Ausbau eines Reibringsegmentes gewünscht sein kann, werden Beschädigungen durch Reibarbeit vermieden. Im Bereich des Ineinandergreifens der Vorsprünge und Ausnehmungen sind die Verbindungselemente angeordnet, welche sich in radialer Richtung des Reibrings betrachtet sowohl durch die Vorsprünge des ersten Ringsegmentes und des zweiten Ringsegmentes erstrecken.

Als Mittel zur Verbindung zweier einander benachbart angeordneter Ringsegmente finden in beiden Fällen beispielsweise Verbindungselemente in Form von Verbindungs- oder Steckbolzen oder-stiften, welchen Mittel zur Sicherung gegenüber Verschiebungen in radialer Richtung aufgrund der Fliehkrafteinwirkung zugeordnet sind, Verwendung. Diese Mittel können dabei
a) direkt vom Verbindungselement oder
b) von einem separaten, mit dem Verbindungselement koppelbaren Element gebildet werden.

Bezüglich der Anordnung der Vorsprünge an den beiden jeweils zueinander weisenden Flächen der einzelnen Reibringsegmente bestehen eine Mehrzahl von Möglichkeiten:
a) wechselweise mit konstantem Abstand;
b) wechselweise mit unterschiedlichem Abstand bzw. unterschiedlicher Breite der einzelnen Vorsprünge bzw. Ausnehmungen, wobei in diesem Fall darauf zu achten ist, daß am jeweils komplementären Bauelement komplementäre Ausnehmungen bzw. Vorsprünge vorgesehen werden.

Die zueinander weisenden Flächen der einander benachbarten Ringsegmente werden auch als Stoß- bzw. Trennflächen bezeichnet, wobei sich die Bezeichnung Stoßfläche im wesentlichen darauf bezieht, daß die beiden Flächen unter Belastung wenigstens mittelbar miteinander in Kontakt gelangen, während der Begriff Trennstelle sich auf die erfindungsgemäße Fertigung der Ringsegmente bezieht. Bei Ausgestaltung dieser Stoß- bzw. Trennflächen, welche die zueinander weisenden Flächen an den Endbereichen der einander benachbarten Reibringsegmente charakterisieren, weisen diese jeweils Teilbereiche auf, welche im wesentlichen in radialer Richtung ausgerichtet sind und in senkrechter Richtung zur radialen Richtung oder in einem Winkel zu dieser verlaufen.

Unter einem weiteren Aspekt der Erfindung sind zur Gewährleistung der Lagefixierung der Reibringhälften zueinander aufgrund des beim erfindungsgemäßen Trennvorgang entstehenden, wenn auch geringen Spaltes in radialer Richtung entsprechende Mittel vorgesehen. Diese können beispielsweise
a) Distanzscheiben im Trennspalt und/oder
b) Stellschrauben und/oder
c) Unterlegscheiben am Ende der Verbindungselemente und/oder
d) Gleitführungen zwischen den Ringsegmenten und den, die Halterung für die Ringsegmente bildenden Elementen
umfassen.

Vorzugsweise werden dabei die Distanzscheiben in den in Umfangsrichtung verlaufenden bzw. ausgerichteten Teilbereichen des Trennspaltes angeordnet. In Analogie gilt dies auch für die Verwendung der Stellschrauben, welche ebenfalls in den in Umfangsrichtung ausgerichteten Trennspaltbereichen wirksam werden.

Die erfindungsgemäße Lösung bietet des weiteren den Vorteil, daß diese zur Fertigung von Reibringen für Bremsscheiben für Anwendungsfälle mit hohen Drehzahlen geeignet ist, das heißt hohen Fliehkräften.

Unter einem weiteren Aspekt der Erfindung wird eine hohe Biegesteifigkeit des Reibringes durch eine mehrschnittige Verbindung der einzelnen Reibringsegmente miteinander erzielt. Dabei werden im Trennbereich, das heißt durch die jeweils zueinander weisenden Vorsprünge der beiden miteinander zu verbindenden Ringsegmente entsprechende Durchgangsöffnungen eingearbeitet, wobei vorzugsweise wenigstens zwei vorgesehen sind, welche parallel zueinander angeordnet sind und die Aufnahme von Verbindungselementen ermöglichen. Die Ausrichtung der Bohrung erfolgt dabei jeweils in radialer Richtung.

Unter einem weiteren Aspekt der Erfindung wird der zwischen den beiden zueinander weisenden Flächen aufgrund des Hydroschneidverfahrens, inbesondere Wasserstrahlschneidverfahrens, entstehende Trennspalt zwischen den beiden miteinander zu koppelnden Ringsegmenten eines Reibringes zur Verhinderung des Abhebens der einzelnen Reibringsegmente unter dem thermischem Einfluß vom Rad im Trennspalt der radial verlaufende Bereich mit einem besonderen Element ausgefüllt, beispielsweise einem Blechstreifen. Die Radbremsscheibe ist dann im Trennbereich biegesteif und verhält sich in Umfangsrichtung ähnlich einem ungeteilten Reibring. Dieses gesonderte Element kann beispielsweise einteilig oder mehrteilig ausgeführt sein, wobei die mehreren Teile in ihrer Gesamtheit diese Funktion übernehmen. Dabei ist jedoch zu beachten, daß der Blechstreifen in den in axialer bzw. in Umfangsrichtung des Reibringes ausgebildeten Bereichen des Trennspaltes eine entsprechende Durchgangsöffnung zur Aufnahme der Verbindungselemente umfassen. Die einzelnen Elemente, insbesondere die Blechstreifen erstrecken sich vorzugsweise wenigstens über einen Teilbereich des Trennspaltes in Breitenrichtung, wobei vorzugsweise eine hälftige Ausführung angestrebt wird. Eine Ausgestaltung mit vollständiger Ausfüllung des Trennspaltes in Breitenrichtung ist ebenfalls denkbar, wobei in diesem Fall entsprechende Durchgangsöffnungen für die Verbindungselemente vorzusehen wären, während im anderen Fall lediglich Aussparungen an den Blechstreifen vorzusehen wären.

Die konkrete Ausgestaltung im Stoß- bzw. Trennbereich, insbesondere der Trennfuge liegt dabei im Ermessen des zuständigen Fachmannes. Wesentlich ist, daß erfindungsgemäß eine Ausgestaltung eines Reibringes aus mehreren Ringsegmenten vorgesehen wird, wobei diese einzelnen, einander in Umfangsrichtung des Reibringes betrachtet, benachbarten Ringsegmente ineinandergreifen und über jeweils wenigstens ein Verbindungsmittel miteinander gekoppelt sind. Durch diese Art der Verbindung werden die beiden Reibringsegmente in der Regel sowohl in axialer als auch radialer Richtung, und zusätzlich in Umfangsrichtung hinreichend gesichert.

Die erfindungsgemäße Lösung ist nachfolgend anhand von Figuren erläutert. Darin ist im einzelnen folgendes dargestellt:
- Figur 1: zeigt in vereinfachter Darstellung eine erfindungsgemäß gestaltete Bremsscheibe an einem Schienenfahrzeugrad;
- Figur 2: verdeutlicht einen Ausschnitt aus einem Reibring im Stoß- bzw. Trennbereich;
- Figur 3a und 3b: verdeutlichen in schematisch vereinfachter Darstellung eine Ausführung einer erfindungsgemäß gestalteten Bremsscheibe mit zwei Verbindungselementen im Stoß- bzw. Trennbereich;
- Figur 4: zeigt eine alternative Anordnungsmöglichkeit der Verbindungselemente im Stoß- bzw. Trennbereich zur Ausführung gemäß Figur 3;
- Figur 5a und 5b: verdeutlichen eine Weiterbildung der erfindungsgemäßen Lösung;
- Figur 6a - 6c: verdeutlichen Möglichkeiten der Lagefixierung der einzelnen Ringsegmente;
- Figur 7a und 7b: zeigen zwei Anwendungsbeispiele für den Einsatz des erfindungsgemäßen Verfahrens.

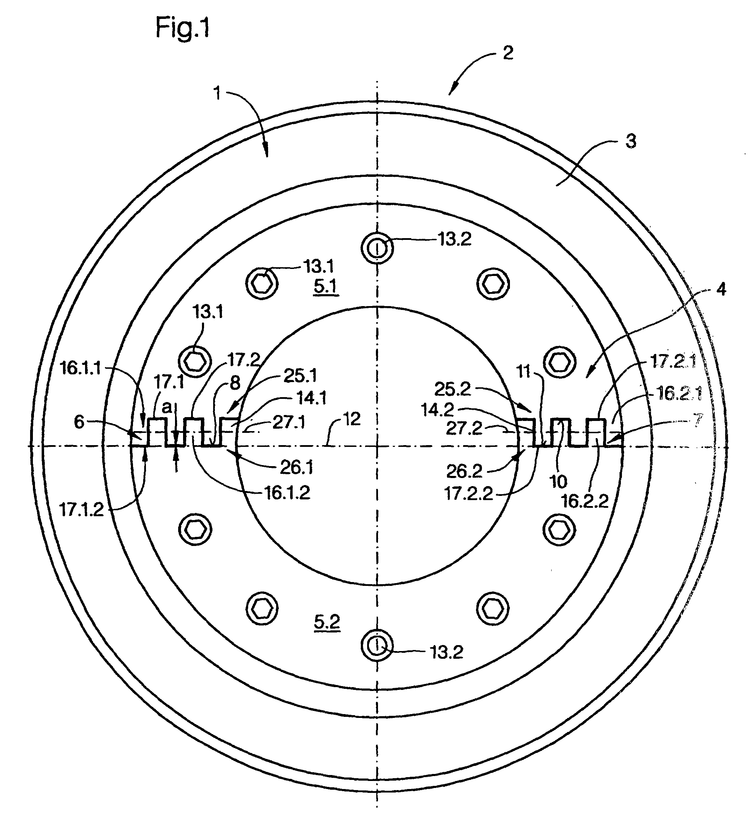

Figur 1 verdeutlicht in vereinfachter Darstellung eine Bremsscheibe 1 in Form einer Radbremsscheibe an einem Schienenfahrzeugrad 2. Das Fahrzeugrad 2 trägt an seiner Radscheibe 3 einen Bremsring in Form eines Reibringes 4. Der Reibring 4 ist in wenigstens zwei Ringsegmente 5.1 und 5.2 unterteilt, welche halbringartig ausgeführt sind. Die Ringsegmente 5.1 und 5.2 sind in Einbaulage in ihren Stoß- bzw. Trennbereichen 6 und 7, als welche die Bereiche charakterisiert werden, die durch das Zueinanderweisen der einzelnen in Umfangsrichtung ausgerichteten Flächen 8, 9 für den Stoß- bzw. Trennbereich 6 und 10 bzw. 11 für den Stoß- bzw. Trennbereich 7 charakterisiert sind, miteinander verbunden. Unter Stoßbereich wird dabei der Bereich verstanden, welcher durch die Erstreckung der Flächen 8, 9 und 10, 11 in Umfangsrichtung beim theoretischen Aneinanderstoßen der einzelnen Endbereiche der zwei in Umfangsrichtung einander benachbart angeordneten Ringsegmente 5.1 und 5.2 unter Belastung charakterisiert ist. Die Endbereiche des Ringsegmentes 5.1 sind dabei mit 25.1 und 25.2 und die Endbereiche des Ringsegmentes 5.2 mit 26.2 bzw. 26.2 bezeichnet. Die Bezeichnung Trennbereich bezieht sich auf die Erstreckung der beim Trennvorgang entstehenden Flächen 8, 9 bzw 10 und 11 in Umfangsrichtung. Beide - Stoßbereich und Trennbereich sind dabei idententisch. Die Stoß- bzw. Trennbereiche 6 und 7 liegen dabei in einer gemeinsamen, die Achse des Fahrzeugrades 2 beinhaltenden Ebene 12. In den Stoß- bzw. Trennbereichen stehen die in Umfangsrichtung im wesentlichen ausgerichteten Flächen 8, 9 bzw. 10 und 11, welche auch als Stirnflächen der Ringsegmente 5.1 und 5.2 bezeichnet werden, im wesentlichen zueinander parallel mit einem bestimmten Abstand a gegenüber, welchen den Trennspalt 28 charakterisiert. Die beiden Ringsegmente 5.1 und 5.2 sind dabei mittels zur Achse des Fahrzeugrades 2 parallel verlaufenden Befestigungsmitteln 13, beispielsweise in Form von Schrauben 13.1 bzw. Spannhülsen 13.2 an der Radscheibe 3 befestigt. Zum Bremsen ist an dem Reibring 4 eine im einzelnen nicht dargestellte Bremsbacke anpressbar. Der Radscheibe 3 zugewandt kann der Reibring 4 bzw. die beiden, diesen bildenden Ringsegmente 5.1 bzw. 5.2 mit Ventilationseinrichtungen, beispielsweise radial gerichteten Kühlluftrippen zur Förderung eines Kühlungsstromes zwischen Reibring 4 und Radscheibe 3 versehen sein.

Die einander in Umfangsrichtung benachbart angeordneten Ringsegmente 5.1 und 5.2 sind im Stoß- bzw. Trennbereich 6 bzw. 7 jeweils mittels in der Figur 1 nur angedeutet dargestellten Verbindungsmitteln 27.1 bzw. 27.2 verbunden. Im dargestellten Fall ist zur Kopplung des Endbereiches 25.1 mit 26.1 und 26.2 mit 26.2 der Ringsegmente 5.1 und 5.2 jeweils nur ein Verbindungsmittel 27.1 bzw. 27.2 vorgesehen. Dies ermöglicht eine gelenkige Verbindung zwischen den Ringsegmenten 5.1 und 5.2. Die Verbindungsmittel 27.1 bzw. 27.2 umfassen dazu Mittel 14 zur gelenkigen Verbindung der in Umfangsrichtung des Reibringes 4 bei Betrachtung als bauliche Einheit aufeinanderfolgenden Ringsegmente 5.1 bzw. 5.2. Diese sind hier im Stoß-bzw. Trennbereich 6 mit 14.1 und im Stoß- bzw. Trennbereich 7 mit 14.2 bezeichnet. Die gelenkige Verbindung kann dabei unterschiedlich ausgeführt werden. Vorzugsweise wird jedoch eine Scharnierverbindung gewählt. Diese wird in einfachster Weise durch die entsprechende Gestaltung der einzelnen Ringsegmente 5.1 und 5.2 im Stoß - bzw. Trennbereich 6 bzw. 7 und der Verbindung der beiden Ringsegmente 5.1 und 5.2 in den Stoß - bzw. Trennbereichen 6 und 7 mittels wenigstens eines Verbindungselementes 15 realisiert. Die beiden Reibringsegmente 5.1 bzw. 5.2 sind im Stoß - bzw. Trennbereich 6 bzw. 7 hinsichtlich ihrer Dicke verstärkt ausgeführt, wobei in diesem verstärkten Bereich die Führungen für die Verbindungselemente 15 eingearbeitet sind. Ferner sind die Enbereiche 25.1, 25.2, 26.2 und 26.2 derart ausgeführt, daß diese in Umfangsrichtung des Reibringes 4 betrachtet unter einem Abstand a ineinandergreifen. Dazu weisen die Reibringsegmente 5.1 und 5.2 im Stoß-bzw. Trennbereich an den zueinander weisenden Flächen 8 und 9 bzw. 10 und 11 unter Berücksichtung des Abstandes zueinander komplementäre Vorsprünge 16 bzw. Ausnehmungen 17 auf. Dabei sind die Vorsprünge am Ringsegment 5.1 im Bereich des Stoß- bzw. Trennbereiches 6 mit 16.1.1 und die Ausnehmungen mit 17.1.1 bezeichnet, während die Vorsprünge im Stoß-bzw. Trennbereich 7 mit 16.2.1 und die Ausnehmungen mit 17.2.1 bezeichnet sind. Die Vorsprünge 16.1.1 im Stoß-bzw. Trennbereich 6 greifen in dazu komplementäre Ausnehmungen 17.1.2 am Ringsegment 2 im Stoß-bzw. Trennbereich 6 ein und die Ausnehmungen 17.1.1 umschließen entsprechende Vorsprünge 16.1.2 am Ringsegment 5.2 im Stoß- bzw. Trennbereich 6. In Analogie gilt dies auch für die Vorsprünge 16.2.1 im Stoß-bzw. Trennbereich 7, welche mit entsprechenden Ausnehmungen 17.2.1 in Wirkverbindung treten und die Ausnehmungen 17.2.1, welche entsprechende Vorsprünge am Ringsegment 5.2 im Stoß-bzw. Trennbereich 7 umschließen.

Durch das Vorsehen von Vorsprüngen 16 und Ausnehmungen 17 ergibt sich in radialer Richtung im Enbereich 25.1 am Ringsegment 5.1 und 26.1 am Ringsegment 5.2 im wesentlichen keine ebene Fläche 8 bzw. 9 sondern eine Ausgestaltung nach Art einer formschlüssigen Verbindung, wobei jedoch die Kopplung zwischen den Ringsegmenten 5.1 und 5.2 im Stoß-bzw. Trennbereich 6 bzw. 7 über die Verbindungselemente 15 erfolgt, die sich in radialer Richtung im Stoß-bzw. Trennbereich 6 bzw. 7 jeweils durch das erste und das zweite Ringsegment 5.1 bzw. 5.2 erstrecken. Vorzugsweise verläuft die Führung der Verbindungselemente 15 genau in radialer Richtung. Denkbar sind jedoch auch Abweichungen. Die zueinander weisenden Flächen 8 bzw. 9 weisen dabei unterschiedliche Flächenbereiche auf, die durch die Vorsprünge 16 und die Ausnehmungen 17 gebildet werden, wobei diese vorzugsweise entweder in radialer Richtung ausgerichtet sind oder aber bezogen auf die radiale Richtung um 90 versetzt dazu. Andere Ausführungen mit anderen Neigungen sind ebenfalls denkbar.

Ein, durch das nachfolgend noch beschriebene Trennverfahren bedingter Abstand a, welcher den Trennspalt 28 beschreibt, dient zusätzlich der Gewährleistung der Bewegbarkeit und ist vorzugsweise kleiner als 1 mm.

Bezüglich der Anordnung der Vorsprünge 16 und der Ausnehmungen 17 an den beiden jeweils zueinander weisenden Flächen 8 und 9 bzw. 10 und 11 der einzelnen Ringsegmente 5.1 und 5.2 bestehen im wesentlichen zwei Möglichkeiten - Anordnung der Vorsprünge bzw. Ausnehmungen mit konstantem Abstand oder sich ändemden Abstand -, wobei im dargestellten Fall eine wechselweise Anordnung mit konstantem Abstand gewählt wird.

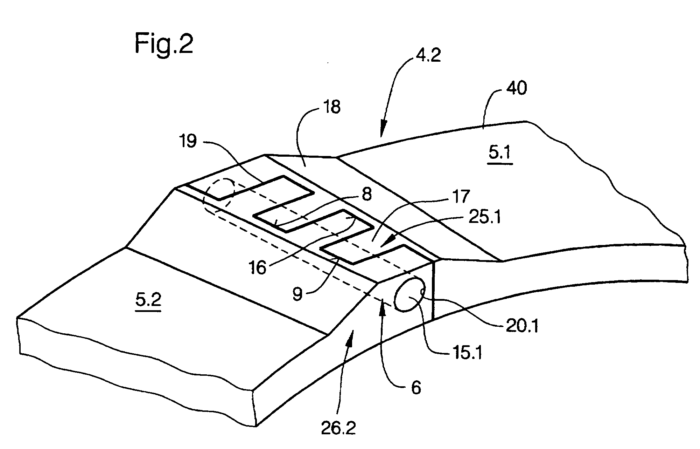

Die Figur 2 verdeutlicht in schematisch vereinfachter Darstellung anhand eines Ausschnittes aus einem Reibring 4.2 die konstruktiven Erfordernisse zur kostengünstigen und einfachen Herstellung der Ringsegmente 5.1 und 5.2 aus einem Grundelement 40. Dazu wird der ungeteilter Reibring 4 als einstückiges bzw. einteiliges ringförmiges Element hergestellt, beispielsweise als Gußteil, wobei die späteren theoretischen Stoß-bzw. Trennbereiche 6 und 7, hier für Stoßbereich 6 dargestellt, verstärkt ausgeführt sind. Dies wird in der Regel durch eine Materialanhäufung realisiert. Dieser verstärkt ausgeführte Bereich ist hier mit 18 bezeichnet und muß nicht deckungsgleich zum Stoß- bzw. Trennbereich 6 bzw. 7 sein. Die Trennung im Bereich der späteren Stoß-bzw. Trennbereiche 6, 7 erfolgt mittels der Wasserstrahlschneidtechnologie, wobei eine Trennfuge 19 derart ausgeführt ist, daß jeweils die beiden nach dem Trennvorgang einander gegenüberliegenden Trennflächen 8 bzw. 9 der einzelnen Reibringsegmente 5.1 und 5.2 Vorsprünge 16 und Ausnehmungen 17 aufweisen, die in Ausnehmungen 17 am anderen gegenüberliegenden Reibringsegment eingreifen bzw. einen anderen Vorsprung unter Bildung eines Abstandes a, den Trennspalt 28, umschließen. Der vorher ungeteilte Reibring 4.2 wird im ungeteilten Zustand fertig bearbeitet und erst dann mittels der Wasserstrahlschneidtechnologie getrennt. Die Schnittführung wird dabei so gelegt, daß nach der Teilung quasi zwei Scharnierhälften in Form der Ringsegmente 5.1 und 5.2 entstehen. Denkbar sind jedoch auch Reibringausführungen mit einer Mehrzahl von Ringsegmenten.

Bei dem angewandten Verfahren des Wasserstrahlschneidens handelt es sich dabei um ein Verfahren zur mechanischen Trennung, welches eine Bearbeitung ohne jegliche Materialdeformation und Gefügeveränderung im Randzonenbereich ermöglicht. Bezüglich des Anwendungsbereiches sind dabei hinsichtlich der Art der verwendeten Werkstoffe keine Grenzen gesetzt. Dies bedeutet, daß der Reibring ebenfalls aus unterschiedlichsten Materialien, beispielsweise Metalle oder anderen Werkstoffen gefertigt werden kann.

Die Kopplung der beiden Ringsegmente 5.1 und 5.2 erfolgt in den Stoß- bzw. Trennbereichen 6 und 7 mittels der Verbindungselemente 15, hier 15.1 für den Stoß- bzw. Trennbereich 6, wobei dieses vorzugsweise in radialer Richtung bezogen auf die Radsymmetrieachse, welche der Reibringsymmetrieachse R_{S} entspricht, geführt ist. Die entsprechende Durchgangsöffnung, welche sich wechselweise durch die Vorsprünge 17 an den einander gegenüberliegenden Endbereichen 25.1 und 16.1 erstreckt, ist mi 20.1 bezeichnet. Vorzugsweise erstreckt sich die Durchgangsöffnung durch die gesamte Erstreckung des Reibringes 4.2 in radialer Richtung und verläuft auch in dieser Richtung. Denkbar sind jedoch auch Ausführungen, bei welchem die Lager der Achse der Durchgangsöffnung von einer in radialer Richtung zur Radsymmetrieachse verlaufenden Verbindungslinie abweicht.

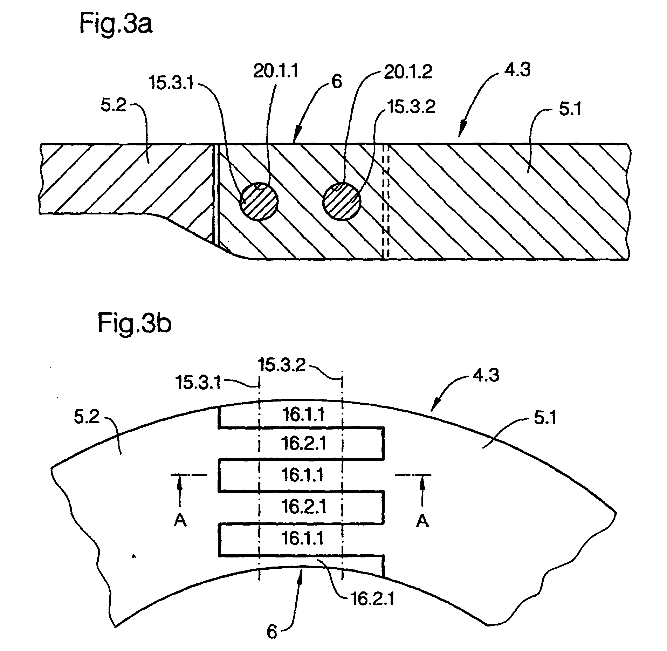

Figur 3 a und 3b verdeutlichen anhand eines Ausschnittes aus einem Reibring 4.3 in zwei Ansichten eine weitere vorteilhafte Ausführung, bei welchem unter einem weiteren Aspekt der Erfindung eine hohe Biegesteifigkeit dadurch erreicht wird, daß eine mehrschnittige Verbindung der einzelnen Reibringsegmente 5.1 und 5.2 vorgenommen wird. Dazu werden jeweils im Stoß- bzw. Trennbereich 6 bzw. 7 wenigstens jeweils zwei Führungen für Verbindungselemente 15 vorgesehen. Diese Führungen in Form von Durchgangsöffnungen sind hier mit 20.1.1 und 20.1.2 für den Stoß-bzw. Trennbereich 6 bezeichnet. Dieese erstrecken sich wechselweise durch die Vorsprünge 16.1.1 und 16.2.1 an den Ringsegmenten 5.1 und 5.2.

Vorzugsweise sind die beiden Durchgangsöffnungen 20.1.1 und 20.1.2 parallel zueinander und im Winkel zu einer theoretischen Verbindungslinie zwischen der Radsymmetrieachse und dem Außenumfang des Reibringes in radialer Richtung angeordnet und ermöglichen die Aufnahme der Verbindungselemente, welche hier mit 15.3.1 und 15.3.2 für den Stoß-bzw. Trennbereich 6 bezeichnet sind. Die Figur 3a verdeutlicht dabei eine Schnittdarstellung durch den Reibring 4.3 im Stoß- bzw. Trennbereich 6 in einer Ebene A-A gemäß Figur 3b parallel zur Radsymmetrieachse R_{S}, während Figur 3b ebenfalls stark vereinfacht einen Ausschnitt einer Ansicht auf den Reibring 4.3 wiedergibt.

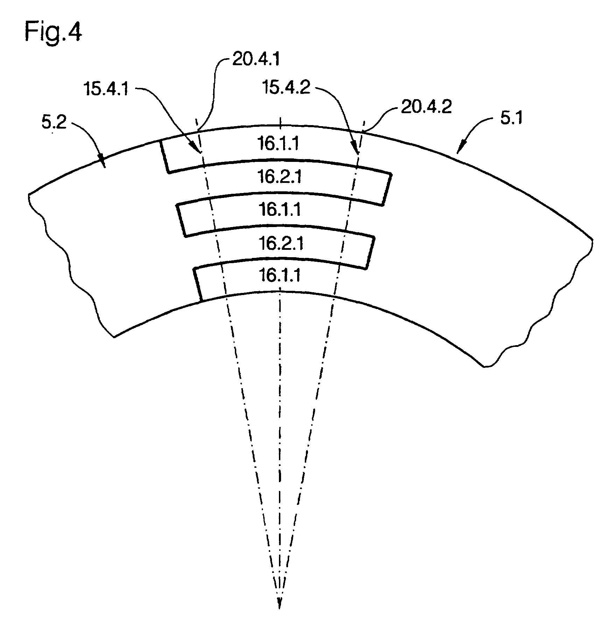

Die Figur 4 verdeutlicht eine Modifikation der Kopplung der Ringsegmente 5.1 und 5.2 gemäß Figur 3, wobei für gleiche Elemente gleiche Bezugszeichen verwendet werden. Die Führung 20.4.1 und 20.4.2 für die Aufnahme der Verbindungselemente 15.4.1 und 15.4.2, welche als sich durch die Vorsprünge 17 am ersten und zweiten Ringsegment erstreckende Durchgangsöffnungen ausgeführt sind, ist derart ausgeführt, daß diese jeweils in radialer Richtung ausgerichtet sind. Dies bedeutet, daß keine Parallelität zwischen den beiden Führungen bzw. Durchgangsöffnungen 20.4.1 und 20.4.2 vorgesehen ist.

Bei den in der Figur 1 bis 4 beschriebenen Ausführungen kommen als Verbindungselemente Bolzen oder Nietelemente in Betracht, wobei es sich beispielsweise bei unbearbeiteter Durchgangsöffnung um Durchsteckbolzen handelt, wobei in diesem Fall wenigstens beidseitig der Ringsegmente in radialer Richtung entsprechende Anschlagselemente vorgesehen werden, beispielsweise in Form eines mit dem Verbindungselement einteilig ausgeführten Kopfes oder aber mit separaten Kopfelementen, die auf die Bolzen aufgeschraubt werden. Eine andere Möglichkeit der Ausführung besteht darin, in der Durchgangsöffnung ein Gewinde vorzusehen, in welches das jeweilige Verbindungselement 15 eingeschraubt werden kann. In diesem Fall ist jedoch zu berücksichtigen, daß ein entsprechend langer Gewindegang vorhanden sein sollte, welcher vor der Trennung des Grundelementes 40 in die einzelnen Ringsegmente, beispielsweise 5.1 und 5.2, im Stoß- bzw. Trennbereich eingearbeitet werden sollte. In allen Figuren erfolgt das Ineinendergreifen der einzelnen Ringsegmente 5.1 und 5.2 immer unter Bildung eines geringen Abstandes a, dem Trennspalt.

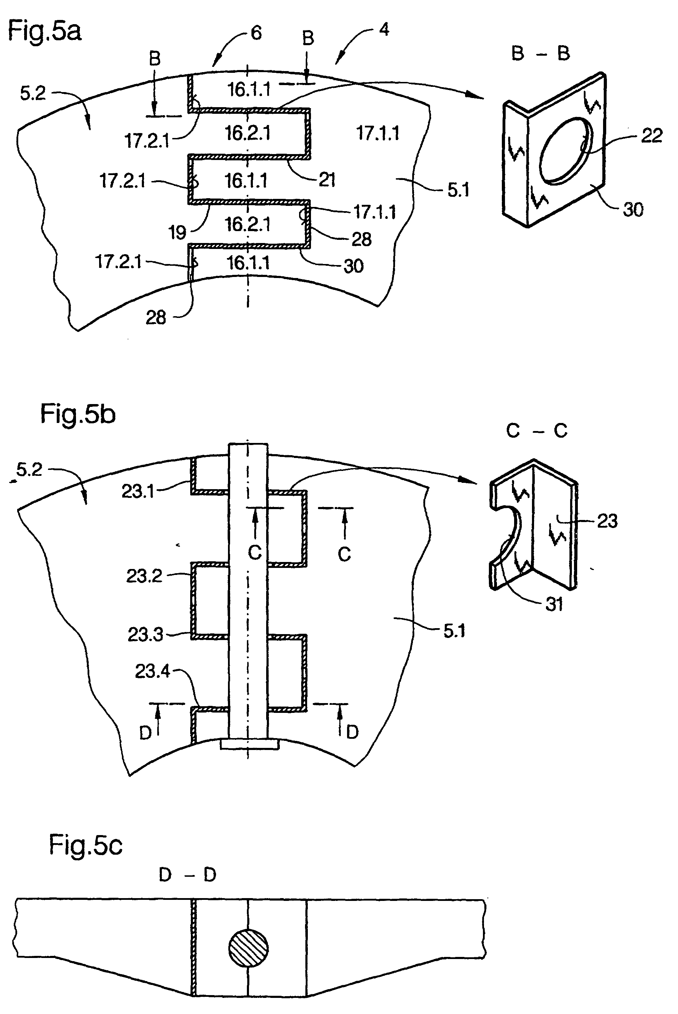

Die Figuren 5a und 5b verdeutlichen eine weitere vorteilhafte Ausgestaltung der erfindungsgemäßen Lösung. Zur Vermeidung eines Abhebens des Bereiches, insbesondere des Stoß-bzw. Trennbereiches der beiden Halbringsegmente 5.1 und 5.2 unter thermischem Einfluß, können die vorgesehenen Befestigungsschrauben für die Bremsscheibe den Reibring 4 nicht plan zu dieser halten. Für diesen Fall ist es möglich, im Stoß- bzw. Trennbereich 6 bzw. 7 unter Bezugnahme auf eine Ausführung gemäß Figur 1 in wenigstens einem Teilbereich der radialen Erstreckung des Reibringes 4 Mittel vorzusehen, welche die Ringsegmente 5.1 und 5.2 im Stoß- bzw. Trennbereich 6 bzw. 7 biegesteif und in Umfangsrichtung des Reibringes 4 elastisch gestalten.

Gemäß Figur 5a umfassen die Mittel, hier mit 21 bezeichnet, einen Blechstreifen 30, der entsprechend der Gestaltung der Trennfuge 19 in den Spalt 28 zwischen dem ersten und dem zweiten Ringsegment 5.1 und 5.2 im Stoß-bzw. Trennbereich 6 angeordnet ist und um die einzelnen Elemente, das heißt Vorsprünge 16.1.1, 16.2.1 und Ausnehmungen 17.1.1 und 17.2.2 meanderförmig entsprechend deren Gestaltung geführt wird. Der Blechstreifen 30 ist dabei im dargestellten Fall einteilig ausgeführt. Denkbar sind jedoch auch Ausführungen mit mehreren einzelnen Blechstreifen, welche hinsichtlich der Erstreckung in radialer Richtung in Einbaulage betrachtet, aneinandergereiht werden. Mit der Lösung gemäß der Figur 5a sind dabei zusätzlich in den in radialer Richtung ausgerichteten Bereichen des Blechstreifens Durchgangsöffnungen zur Führung der Verbindungselemente 15 vorzusehen. Die Durchgangsöffnungen, hier mit 22 bezeichnet, werden dabei hinsichtlich ihrer Abmessung vorzugsweise mit einem größeren Durchmesser ausgeführt, um Toleranzen auszugleichen. Um ein möglichst optimales Ergebnis zu erhalten, wird vorzugsweise eine vollständige Ausfüllung des Trennspaltes 28 durch die Mittel 21 gewünscht. Der Blechstreifen 30 weist daher eine Breite auf, welche der Breite des Reibringes 4 entspricht.

Denkbar ist jedoch auch eine Ausführung gemäß Figur 5b, bei welcher die Mittel Blechstreifenelemente 23.1 bis 23.4 umfassen, welche beispielsweise eine bauliche Einheit bilden können. Diese erstrecken sich entweder wie in Figur 5a dargestellt über die gesamte Breite des Reibringes 4 oder aber lediglich über einen Teil der Breite des Reibringes 4. Das Verbindungselement 15 bzw. die Verbindungslemente werden dann nur teilweise vom Blechstreifen 23.1 bis 23.4 umschlossen. Zur Vermeidung von Kollisionen mit den Verbindungselementen 15 weisen der Blechstreifen bzw. die Blechstreifenelemente 23.1- 23.4 eine randoffene Aussparung 31 auf.

Die Figur 5c verdeutlicht eine Ansicht D-D auf Figur 5b.

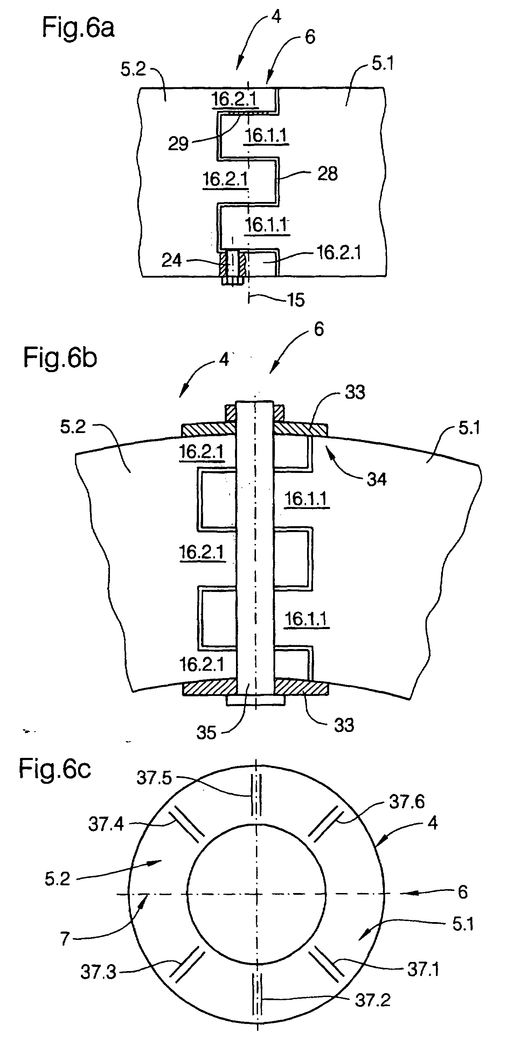

Die Figur 6a bis 6c verdeutlichen anhand einer Ansicht auf einen Trennspalt 28 verschiedene Möglichkeiten der Gewährleistung der exakten Lage der Ringegmente 5.1, 5.2 zueinander in radialer Richtung. Diese können einzeln oder in Kombination miteinander eingesetzt werden. Denkbar ist dabei das Vorsehen wenigstens einer Distanzscheibe 29 im Trennspalt 28. Diese wird vorzugsweise in einem Bereich des Trennspaltes 28 angeordnet, welcher in Umfangsrichtung des Reibringes 4 bzw. der einzelnen Ringsegmente 5.1 und 5.2 ausgerichtet ist.

Eine weitere Möglichkeit besteht im Einsatz von Stellschrauben 24. Diese erstrecken sich durch einen Teilbereich eines der Ringsegmente bis in den Trennspalt 28 in radialer Richtung hinein und sind hinsichtlich ihrer Erstreckung in radialer Richtung über ein Gewinde 32 verstellbar.

Figur 6b verdeutlicht eine einfach realisierbare Möglichkeit der Lagefixierung durch Vorsehen von Unterlegscheiben 33 im Endbereich 34 der Verbindungselemente 15, hier eines Bolzens 35. Beim, Anziehen des Bolzens 35 werden dabei die beiden in Umfangsrichtung einander benachbarten Ringsegmente 5.1 und 5.2 gegeneinander verspannt.

Figur 6c zeigt in schematisch stark vereinfachter Darstellung eine weitere Möglichkeit der Lagefixierung der Ringsegmenete 5.1 und 5.2 in radialer Richtung. Dazu sind diese mittels einer Vielzahl von Gleitführungen 36 fixierbar, welche in radialer Richtung ausgerichtet sind, wobei jedes Ringsegment wenigstens ein Element der Führung trägt, beispeilsweise Gleitsteine 37. Je Ringsegment werden dabei eine bestimmte Anzahl von Gleitsteinen 37 vorgesehen, hier jeweils mit 37.1 - 37.3 für das Ringsegment 5.1 und 37.4 - 37.6 für das Ringsegment 5.2 bezeichnet.

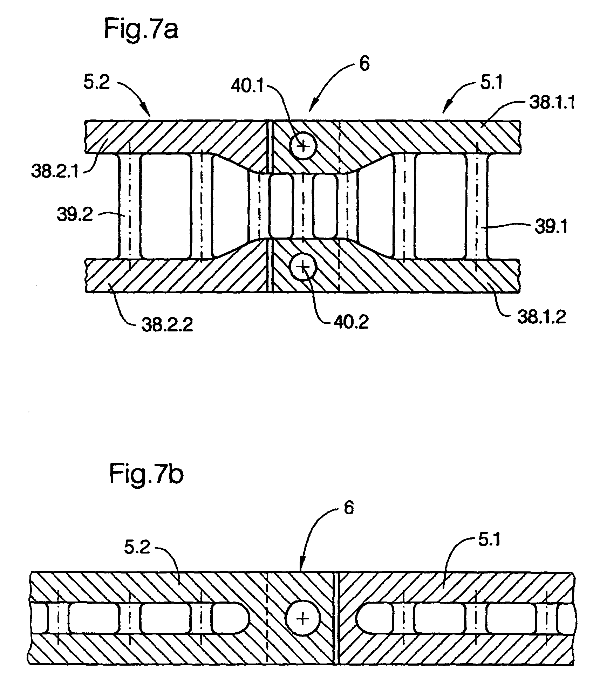

Die erfindungsgemäße Lösung der Herstellung von Bremsscheiben, insbesondere der Reibringe, ist für jede Ausführung von Reibringen, unabhängig von deren Dicke und Ausgestaltung geeignet. Figur 7a und Figur 7b verdeutlichen dabei die Anwendung des erfindungsgemäßen Verfahrens an zwei unterschiedlich gestalteten Reibringen 4.7.1 und 4.7.2.

Gemäß Figur 7a ist mit 4.7.1 ein stärkerer Reibring bezeichnet, dessen Ringsegmente 5.1 und 5.2 jeweils zwei scheibenförmige Elemente 38.1.1, 38.1.2 und 38.2.1. 38.2.2 umfassen, welche über Kühlstege 39.1 bzw. 39.2 miteinander gekoppelt sind. Im Stoß- bzw. Trennbereich 6 sind zur Verbindung der Ringsegmente 5.1 und 5.2 wenigstens jeweils ein Verbindungselement 40.1 im Kopplungsbereich der einzelnen scheibenförmigen Elemente 38.1.1 und 38.2.1 und ein Verbindungselement 40.2 im Kopplungsbereich der einzelnen scheibenförmigen Elemente 38.1.2 und 38.2.2 vorgesehen.

Die Figur 7b verdeutlicht eine Anwendung in einer dünnen Bremsscheibe 1, wobei bezüglich der Ausbildung des Stoß- bzw. Trennbereiches 6 bzw. 7 und der Kopplung der beiden miteinander zu verbindenden Ringsegmente 5.1 und 5.2 auf die Ausführungen zu den Figuren 1 bis 6 verwiesen werden kann.

### Bezugszeichenliste

- 1: Bremsscheibe
- 2: Fahrzeugrad
- 3: Radscheibe
- 4: Reibring
- 4.2, 4.3 4.7.1, 4.7.2: Reibring
- 5.1, 5.2: Ringsegmente
- 6: Stoß-bzw. Trennbereich
- 7: Stoß-bzw. Trennbereich
- 8: Fläche
- 9: Fläche
- 10: Fläche
- 11: Fläche
- 12: Ebene
- 13: Befestigungsmittel
- 13.1: Schraube
- 13.2: Spannhülse
- 14: Mittel zur gelenkigen Verbindung
- 14.1, 14.2: Mittel zur gelenkigen Verbindung
- 15: Verbindungselemente
- 15.1, 15.2, 15.3.1, 15.3.2, 15.4.1, 15.4.2: Verbindungselemente
- 16: Vorsprung
- 16.1.1: Vorsprung am Ringsegment 5.1 im Stoß-bzw. Trennbereich 6
- 16.1.2: Vorsprung am Ringsegment 5.1 im Stoß-bzw. Trennbereich 7
- 16.2.1: Vorsprung am Ringsegment 5.2 im Stoß-bzw. Trennbereich 6
- 16.2.2: Vorsprung am Ringsegment 5.2 im Stoß-bzw. Trennbereich 7
- 17: Ausnehmungen
- 17.1.1: Ausnehmung am Ringsegment 5.1 im Stoß-bzw. Trennbereich 6
- 17.1.2: Ausnehmung am Ringsegment 5.1 im Stoß-bzw. Trennbereich 7
- 17.2.1: Ausnehmung am Ringsegment 5.2 im Stoß-bzw. Trennbereich 6
- 17.2.2: Ausnehmung am Ringsegment 5.2 im Stoß-bzw. Trennbereich 7
- 18: Verstärkt ausgeführter Bereich
- 19: Trennfuge
- 20.1, 20.2: Durchgangsöffnung, Führung
- 20.1.1, 20.1.2 20.4.1, 20.4.2: Durchgangsöffnung, Führung
- 21: Mittel
- 22: Durchgangsöffnung am Blechstreifen 30
- 23.1, 23.2 23.3, 23.4: Blechstreifenelemente
- 24: Stellschraube
- 25.1: Endbereich des Ringsegmentes 5.1 im Stoß- bzw. Trennbereich 6
- 25.2: Endbereich des Ringsegmentes 5.1 im Stoß- bzw. Trennbereich 7
- 26.1: Endbereich des Ringsegmentes 5.2 im Stoß- bzw. Trennbereich 6
- 26.1: Endbereich des Ringsegmentes 5.2 im Stoß- bzw. Trennbereich 7
- 27.1, 27.2: Verbindungsmittel
- 28: Trennspalt
- 29: Distanzscheibe
- 30: Blechstreifen
- 31: randoffene Aussparung
- 32: Gewinde
- 33: Unterlegscheibe
- 34: Endbereich des Bolzens 35
- 35: Bolzen
- 36: Gleitführung
- 37.1 - 37.3: Gleitsteine am Ringsegment 5.1
- 37.4 - 37.6: Gleitsteine am Ringsegment 5.2
- 38.1.1, 38.1.2: scheibenförmige Elemente
- 39.1, 39.2: Kühlstege
- 40.1, 40.2: Verbindungselemente

## Patentansprüche

1. Verfahren zur Herstellung eines Reibringes (4, 4.2, 4.3), bestehend aus wenigstens zwei Ringsegmenten - einem ersten Ringsegment (5.1) und einem zweiten Ringsegment (5.2), für eine Bremsscheibe (1);
1.1 die Ringsegmente (5.1, 5.2) werden aus einem einstückigen, ringförmigen Grundelement (40) mittels einem mechanischen Trennverfahren erzeugt; **gekennzeichnet durch** die folgenden Merkmale:
1.2 die Ringsegmente (5.1, 5.2) werden unter Anwendung eines Hydroschneidverfahrens aus dem Grundelement (40) herausgetrennt, wobei die Trennfuge (19) derart ausgeführt wird, daß die zueinander weisenden Endbereiche (25.1, 25.2, 26.1, 26.2) zweier in Umfangsrichtung einander benachbarter Ringsegmente (5.1, 5.2), deren Erstreckung in Umfangsrichtung des Reibringes (4, 4.2, 4.3) einen Stoß- bzw. Trennbereich (6, 7) charakterisieren, unter Bildung eines Trennspaltes (28) ineinander eingreifen;
1.3 die in Umfangsrichtung betrachtet einander benachbart angeordneten Ringsegmente (5.1, 5.2) werden im Stoß- bzw. Trennbereich (6, 7) wenigstens jeweils mit einem Verbindungsmittel (14, 14.1, 14.2, 15, 15.1, 15.2, 15.3.1, 15.3.2, 15.4.1, 15.4.2) miteinander gekoppelt.

2. Verfahren nach Anspruch 1, **dadurch gekennzeichnet, daß** das Grundelement (40) vor dem Heraustrennen der Ringsegmente (5.1, 5.2) hinsichtlich seiner Oberflächenbeschaffenheit endbehandelt wird.

3. Verfahren nach einem der Ansprüche 1 oder 2, **dadurch gekennzeichnet, daß** die Verbindungsmittel (14, 14.1, 14.2, 15, 15.1, 15.2, 15.4.1, 15.4.2) im Stoß-bzw. Trennbereich (6, 7) durch wenigstens jeweils einen Teilbereich der Endbereiche (25.1, 25.2, 26.1, 26.2) der Erstreckung der einander benachbart angeordneten Ringsegmente (5.1, 5.2) in radialer Richtung geführt werden.

4. Verfahren nach Anspruch 3, **dadurch gekennzeichnet, daß** die Verbindungselemente (15.3.1, 15.3.2) in einem Winkel zu einer theoretischen Verbindungslinie zwischen der Symmetrieachse des Reibringes (4) und dem Auβenumfang des Reibringes (4, 4.2, 4.3) geführt werden.

5. Verfahren nach einem der Ansprüche 3 oder 4, **dadurch gekennzeichnet, daß** das Grundelement (40) in den im geteilten Zustand von den Ringsegmenten (5.1, 5.2) zu bildenden Stoß- bzw. Trennbereichen (6, 7) hinsichtlich der Materialdicke verstärkt ausgeführt wird.

6. Verfahren nach einem der Ansprüche 3 bis 5, **dadurch gekennzeichnet, daß** die Verbindungsmittel (14, 14.1, 14.2, 15, 15.1, 15.2, 15.3.1, 15.3.2, 15.4.1, 15.4.2) in, in den Endbereichen (25.1, 25.2, 26.2, 26.2) der Ringsegmente (5.1, 5.2) angeordneten Ausnehmungen oder Durchgangsöffnungen (20.1, 20.2, 20.1.1, 20.1.2, 20.4.1, 20.4.2) geführt werden.

7. Verfahren nach Anspruch 6, **dadurch gekennzeichnet, daß** die in den Endbereichen (25.1, 25.2, 26.2, 26.2) der Ringsegmente (5.1, 5.2) angeordneten Ausnehmungen oder Durchgangsöffnungen (20.1, 20.2, 20.1.1, 20.1.2, 20.4.1, 20.4.2) im ungeteilten Zustand des Grundelementes (40) im zu bildenden Stoß- bzw. Trennbereich (6, 7) eingearbeitet werden.

8. Verfahren nach einem der Ansprüche 1 bis 7, **dadurch gekennzeichnet, daß** die Trennfuge (19) am Grundelement (40) derart ausgeführt wird, daß die einander in Umfangsrichtung benachbart angeordneten Ringsegmente (5.1, 5.2) in den zueinander weisenden Endbereichen (25.1, 26.1, 25.2, 26.2) jeweils unter Berücksichtigung des Trennspaltes (29) zueinander komplementär ausgeführte Ausnehmungen (17, 17.1.1, 17.1.2, 17.2.1, 17.2.2) und Vorsprünge (16, 16.1.1, 16.1.2, 16.2.1, 16.2.2) aufweisen, wobei die Abstände und Abmessungen der Vorsprünge (16, 16.1.1, 16.1.2, 16.2.1, 16.2.2) und Ausnehmungen (17, 17.1.1, 17.1.2, 17.2.1, 17.2.2) jeweils konstant gewählt werden.

9. Verfahren nach einem der Ansprüche 1 bis 7, **dadurch gekennzeichnet, daß** die Trennfuge (19) am ungeteilten Grundelement (40) derart ausgeführt wird, daß die einander in Umfangsrichtung benachbart angeordneten Ringsegmente (5.1, 5.2) in den zueinander weisenden Endbereichen (25.1, 26.1, 25.2, 26.2) jeweils unter Berücksichtigung des Trennspaltes (29) zueinander komplementär ausgeführte Ausnehmungen (17, 17.1.1, 17.1.2, 17.2.1, 17.2.2) und Vorsprünge (16, 16.1.1, 16.1.2, 16.2.1, 16.2.2) aufweisen, wobei die Abstände und Abmessungen der Vorsprünge (16, 16.1.1, 16,1.2, 16.2.1, 16.2.2) und Ausnehmungen (17, 17.1.1, 17.1.2, 17.2.1, 17.2.2) in radialer Richtung des Reibringes (4, 4.1, 4.2) variiert werden.

10. Verfahren nach einem der Ansprüche 1 bis 9, **dadurch gekennzeichnet, daß** zur Erhöhung der Biegesteifigkeit die einander in Umfangsrichtung benachbart angeordneten Ringsegmente (5.1, 5.2) jeweils über eine Mehrzahl von Verbindungsmitteln (15.3.1, 15.3.2, 15.4.1, 15.4.2) im Stoß- bzw. Trennbereich (6, 7) miteinander gekoppelt werden.

11. Verfahren nach einem der Ansprüche 1 bis 10, **dadurch gekennzeichnet, daß** Mittel zur Lagefixierung der miteinander zu koppelnden Ringsegmente (5.1, 5.2) in radialer Richtung vorgesehen werden.

12. Bremsscheibe (1),
12.1 mit wenigstens einem, wenigstens einseitig von einer Bremsbacke beaufschlagbaren Reibring (4, 4.1, 4.2), welcher in wenigstens zwei, im Bereich ihrer Endbereiche (25.1, 25.2, 26.2, 26.2) miteinander koppelbare Ringsegmente (5.1, 5.2) unterteilt ist; **gekennzeichnet durch** die folgenden Merkmale:
12.2 die zueinander weisenden Endbereiche (25.1, 25.2, 26.1, 26.2) zweier einander in Umfangsrichtung benachbart angeordneter Ringsegmente (5.1, 5.2) greifen unter Bildung eines Trennspaltes (28) ineinander und beschreiben hinsichtlich ihrer Erstreckung in Umfangsrichtung des Reibringes (4) einen Stoß- bzw. Trennbereich (6, 7);
12.3 es ist wenigstens ein Verbindungsmittel (14, 14.1, 14.2, 15, 15.1, 15.2, 15.3.1, 15.3.2, 15.4.1, 15.4.2) zur Kopplung der einander in Umfangsrichtung benachbart angeordneten Ringsegmente (5.1, 5.2) im Stoß- bzw. Trennbereich (6, 7) vorgesehen.

13. Bremsscheibe (1) nach Anspruch 12, **dadurch gekennzeichnet, daß** die einander in Umfangsrichtung benachbart angeordneten Ringsegmente (5.1, 5.2) an den zueinander weisenden Endbereichen (25.1, 26.1, 25.2, 26.2) jeweils unter Berücksichtigung des Trennspaltes (29) zueinander komplementär ausgeführte Ausnehmungen (17, 17.1.1, 17.1.2, 17.2.1, 17.2.2) und Vorsprünge (16, 16.1.1, 16.1.2, 16.2.1, 16.2.2) aufweisen, welche jeweils wechselweise angeordnet sind.

14. Bremsscheibe (1) nach Anspruch 13, **dadurch gekennzeichnet, daß** die durch die Ausnehmungen (17, 17.1.1, 17.1.2, 17.2.1, 17.2.2) und Vorsprünge (16, 16.1.1, 16.1.2, 16.2.1, 16.2.2) beschreibbaren Flächenbereiche in radialer Richtung bezogen auf die Reibringsymmetrieachse R_{S} und senkrecht zu dieser verlaufen.

15. Bremsscheibe (1) nach Anspruch 13 oder 14, **dadurch gekennzeichnet, daß** die Abstände und Abmessungen der Vorsprünge (16, 16.1.1, 16.1.2, 16.2.1, 16.2.2) und Ausnehmungen (17, 17.1.1, 17.1.2, 17.2.1, 17.2.2) in den einzelnen Endbereichen (25.1, 25.2, 26.1, 26.2) in radialer Richtung des Reibringes (4, 4.1, 4.2) betrachtet jeweils konstant sind.

16. Bremsscheibe (1) nach einem der Ansprüche 12 bis 15, **dadurch gekennzeichnet, daß** der Reibring (4, 4.1, 4.2) im Stoß- bzw. Trennbereich (6, 7) bzw. die Ringsegmente (5.1, 5.2) in ihren Endbereichen (25.1, 25.2, 26.1, 26.2) eine größere Breite aufweist.

17. Bremsscheibe (1) nach einem der Ansprüche 12 bis 16, **gekennzeichnet durch** die folgenden Merkmale:
17.1 die Verbindungsmittel (14, 14.1, 14.2, 15, 15.1, 15.2, 15.3.1, 15.3.2, 15.4.1, 15.4.2) sind in, in den Endbereichen (25.1, 25.2, 26.2, 26.2) der Ringsegmente (5.1, 5.2) angeordneten Ausnehmungen oder Durchgangsöffnungen (20.1, 20.2, 20.1.1, 20.1.2, 20.4.1, 20.4.2) geführt;
17.2 die Verbindungsmittel (14, 14.1, 14.2, 15, 15.1, 15.2, 15.3.1, 15.3.2, 15.4.1, 15.4.2) erstrecken sich über wenigstens einen Teilbereich der Erstreckung des Reibringes (4, 4.2, 4.3) in radialer Richtung.

18. Bremsscheibe (1) nach Anspruch 17, **dadurch gekennzeichnet, daß** die in den Endbereichen (25.1, 25.2, 26.2, 26.2) der Ringsegmente (5.1, 5.2) angeordneten Ausnehmungen oder Durchgangsöffnungen (20.1, 20.2, 20.4.1, 20.4.2) in radialer Richtung bezogen auf die Reibringsymmetrieachse R_{S} ausgerichtet sind.

19. Bremsscheibe (1) nach Anspruch 17, **dadurch gekennzeichnet, daß** die in den Endbereichen (25.1, 25.2, 26.2, 26.2) der Ringsegmente (5.1, 5.2) angeordneten Ausnehmungen oder Durchgangsöffnungen (20.3.1, 20.3.2) in einem Winkel zu einer theoretischen Verbindungslinie zwischen der Symmetrieachse des Reibringes R_{S} und dem Außenumfang des Reibringes (4, 4.2, 4.3) ausgerichtet sind.

20. Bremsscheibe nach einem der Ansprüche 12 bis 19, **dadurch gekennzeichnet, daß** im Trennspalt (28) zwischen den zueinander weisenden Flächen an den Enbereichen (25.1, 25.2, 26.2, 26.2) der einander in Umfangsrichtung benachbart angeordneten Ringsegmente (5.1, 5.2) Mittel zur Vermeidung einer Relativbewegung der Ringsegmente (5.1, 5.2) in radialer Richtung vorgesehen sind.

21. Bremsscheibe (1) nach Anspruch 20, **dadurch gekennzeichnet, daß** die Mittel wenigstens eine im Trennspalt (28) angeordnete Distanzscheibe (29) umfassen.

22. Bremsscheibe (1) nach Anspruch 20, **dadurch gekennzeichnet, daß** die Mittel wenigstens eine, sich wenigstens in den ersten im wesentlichen horizontalen Bereich des Trennspaltes (28) erstreckende Stellschraube (29) umfassen.

23. Bremsscheibe (1) nach Anspruch 20, **dadurch gekennzeichnet, daß** die Mittel eine Gleitführung (36) zwischen den Ringsegmenten (5.1, 5.2) und den daran angeschlossenen Elementen umfassen.

24. Bremsscheibe (1) nach Anspruch 20, **dadurch gekennzeichnet, daß** die Mittel von den Verbindungsmitteln (14, 14.1, 14.2, 15, 15.1, 15.2, 15.3.1, 15.3.2, 15.4.1, 15.4.2) gebildet werden.

25. Bremsscheibe (1) nach einem der Ansprüche 12 bis 24, **dadurch gekennzeichnet, daß** die Verbindungsmittel (14, 14.1, 14.2, 15, 15.1, 15.2, 15.3.1, 15.3.2, 15.4.1, 15.4.2) als Bolzen (35) ausgeführt sind.

26. Bremsscheibe (1) nach einem der Ansprüche 12 bis 24, **dadurch gekennzeichnet, daß** die Verbindungsmittel (14, 14.1, 14.2, 15, 15.1, 15.2, 15.3.1, 15.3.2, 15.4.1, 15.4.2) als Schraubelemente ausgeführt sind.

27. Bremsscheibe (1) nach einem der Ansprüche 12 bis 26, dadurch gekennzeichent, daß der Trennspalt (28) wenigstens teilweise von einem Blechelement (23.1-23.4, 30) ausgefüllt wird.

## Claims

1. Method of manufacturing a friction ring (4, 4.2, 4.3) consisting of at least two annular segments, i.e. a first ring segment (5.1) and a second ring segment (5.2), for a brake disc (1);
1.1 wherein said ring segments are produced from a single-piece annular basic element (40) by means of a mechanical separation technique;
**characterised by** the following features:
1.2 said ring segments (5.1, 5.2) are severed from said basic element (40) by application of a hydro cutting technique, with the severance joint (19) being realised in such a manner that the terminal sections facing each other (25.1, 25.2, 26.1, 26.2) of two ring segments (5.1, 5.2) adjacent to each other along the peripheral direction, whose extension in the peripheral direction of said friction ring (4, 4.2, 4.3) characterises a joint or severance section (6, 7), are engaged in each other while forming a severance gap (28);
1.3 said ring segments (5.1, 5.2) disposed to be adjacent to each other, when seen along the peripheral direction, are coupled to each other in said joint or severance section (6, 7), each at least by one connector means (14, 14.1, 14.2, 15, 15.1, 15.2, 15.3.1, 15.3.2, 15.4.1, 15.4.2).

2. Method according to Claim 1, **characterised in that** prior to severing said ring segments (5.1, 5.2), said basic element (40) is subjected to a finishing treatment in view of its surface finish.

3. Method according to any of the Claims 1 o r 2, **characterised in that** said connector means (14, 14.1, 14.2, 15, 15.1, 15.2, 15.4.1, 15.4.2) in said joint or severance section (6, 7) is passed through at least one respective partial section of said terminal sections (15.1, 25.2, 26.1, 26.2) of the extension of said ring segments (5.1, 5.2) disposed to be adjacent to each other, in a radial direction.

4. Method according to Claim 3, **characterised in that** said fasteners (15.3.1, 15.3.2) are guided at an angle relative to a theoretic connecting line between the axis of symmetry of said friction ring (4) and the external periphery of said friction ring (4, 4.2, 4.3).

5. Method according to any of the Claims 3 or 4, **characterised in that** said basic element (40) is realised in a reinforced form in view of the thickness of the material in said joint or severance sections (6, 7) to be formed by said ring segments (5.1, 5.2) in the divided condition.

6. Method according to any of the Claims 3 to 5, **characterised in that** said connector means (14, 14.1, 14.2, 15, 15.1, 15.2, 15.3.1, 15.3.2, 15.4.1, 15.4.2) are guided in recesses or through-passages (20.1, 20.2, 20.1.1., 20.1.2, 20.4.1, 20.4.2) disposed in the terminal sections (25.1, 25.2, 26.2, 26.2) of said ring segments (5.1, 5.2).

7. Method according to Claim 6, **characterised in that** said recesses or through-passages (20.1, 20.2, 20.1.1, 20.1.2, 20.4.1, 20.4.2) are machined in said joint or severance section (6, 7) to be formed in the undivided condition of said basic element (40).

8. Method according to any of the Claims 1 to 7, **characterised in that** said severance joint (19) is realised on said basic element (40) in such a manner that the ring segments (5.1, 5.2) disposed to be adjacent to each other along the peripheral direction are provided with recesses (17, 17.1.1, 17.1.2, 17.2.1, 17.2.2) and projections (16, 16.1.1, 16.1.2, 16.2.1, 16.2.2) in said terminal sections (25.1, 26.1, 25.2., 26.1) facing each other, which recesses and projections are each configured to be complementary to each other with consideration of said severance gap (29), with the distances and dimensions of said projections (16, 16.1.1, 16.1.2, 16.2.1, 16.2.2) and said recesses (17, 17.1.1, 17.1.2, 17.2.1, 17.2.2) being each selected to be constant.

9. Method according to any of the Claims 1 to 7, **characterised in that** said severance joint (19) is realised on said undivided basic element (40) in such a way that said ring segments (5.1, 5.2) disposed to be adjacent to each other along the peripheral directions, are provided with recesses (17, 17.1.1, 17.1.2, 17.2.1, 17.2.2) and projections (16, 16.1.1, 16.1.2, 16.2.1, 16.2.2) in said terminal sections (25.1, 26.1, 25.2., 26.1) facing each other, which recesses and projections are each configured to be complementary to each other with consideration of said severance gap (29), with the distances and dimensions of said projections (16, 16.1.1, 16.1.2, 16.2.1, 16.2.2) and said recesses (17, 17.1.1, 17.1.2, 17.2.1, 17.2.2) being varied along the radial direction of said friction ring (4, 4.1, 4.2).

10. Method according to any of the Claims 1 to 9, **characterised in that** said ring segments (5.1, 5.2) disposed to be adjacent to each other along the peripheral direction are coupled to each other via a respective plurality of connector means (15.3.1, 15.3.2, 15.4.1, 15.4.2) in said joint or severance section (6, 7).

11. Method according to any of the Claims 1 to 10, **characterised in that** means are provided for fixing said ring segments (5.1, 5.2) to be coupled to each other in their position along the radial direction.

12. Brake disc (1) comprising
12.1 at least one friction ring (4, 4.1, 4.2) adapted to be acted upon, at least on one side, by a brake shoe, which is subdivided into at least two ring segments (5.1, 5.2) adapted to be coupled to each other in the region of their terminal sections (25.1, 25.2, 26.2, 26.2);
**characterised by** the following features:
12.2 said terminal sections (25.1, 25.2, 26.1, 26.2) facing each other of two ring segments (5.1, 5.2) disposed to be adjacent to each other along the peripheral direction are engaged in each other, forming a severance gap (28), and define a joint or severance section (6, 7), respectively, in view of their extension along the peripheral direction of said friction ring (4);
12.3 at least one fastener (14, 14.1, 14.2, 15, 15.1, 15.2, 15.3.1, 15.3.2, 15.4.1, 15.4.2) is provided for coupling said ring segments (5.1, 5.2) in said joint or severance section (6, 7), respectively, which are disposed to be adjacent to each other along the peripheral direction.

13. Brake disc (1) according to Claim 12, **characterised in that** said ring segments (5.1, 5.2) disposed to be adjacent to each other along the peripheral direction are provided with recesses (17, 17.1.1, 17.1.2, 17.2.1, 17.2.2) and projections (16, 16.1.1, 16.1.2, 16.2.1, 16.2.2) in said terminal sections (25.1, 26.1, 25.2., 26.1) facing each other, which recesses and projections are each configured to be complementary to each other with consideration of said severance gap (29) and are arranged in alternation.

14. Brake disc (1) according to Claim 13, **characterised in that** the area regions that can be defined by said recesses (17, 17.1.1, 17.1.2, 17.2.1, 17.2.2) and said projections (16, 16.1.1, 16.1.2, 16.2.1, 16.2.2) extend in the radial direction, relative to the axis of symmetry R_{S} of said friction ring, and orthogonally on the latter.

15. Brake disc (1) according to Claim 13 or 14, **characterised in that**, seen along the radial direction of said friction ring (4, 4.1, 4.2), the distances and dimensions of said projections (16, 16.1.1, 16.1.2, 16.2.1, 16.2.2) and said recesses (17, 17.1.1, 17.1.2, 17.2.1, 17.2.2) in the individual terminal sections (25.1, 25.2, 26.1, 26.2) are each constant.

16. Brake disc (1) according to any of the Claims 12 to 15, **characterised in that** said friction ring (4, 4.1, 4.2) in said joint or severance section (6, 7), respectively, or said ring segments (5.1, 5.2) in their terminal sections (25.1, 25.2, 26.1, 26.2) present a larger width.

17. Brake disc (1) according to any of the Claims 12 to 16, **characterised by** the following features:
17.1 said connector means (14, 14.1, 14.2, 15, 15.1, 15.2, 15.3.1, 15.3.2, 15.4.1, 15.4.2) are guided in recesses or through-passages (20.1, 20.2, 20.1.1., 20.1.2, 20.4.1, 20.4.2) disposed in the terminal sections (25.1, 25.2, 26.2, 26.2) of said ring segments (5.1, 5.2);
17.2 said connector means (14, 14.1, 14.2, 15, 15.1, 15.2, 15.3.1, 15.3.2, 15.4.1, 15.4.2) extend over at least one partial section of the extension of said friction ring (4, 4.2, 4.3) along the radial direction.

18. Brake disc (1) according to Claim 17, **characterised in that** said recesses or through-passages (20.1, 20.2, 20.4.1, 20.4.2) formed in said terminal sections (25.1, 25.2, 26.2., 26.2) of said ring segments (5.1, 5.2) are oriented along the radial direction relative to the axis of symmetry Rs of said friction ring.

19. Brake disc (1) according to Claim 17, **characterised in that** said recesses or through-passages (20.3.1, 20.3.2) formed in said terminal sections (25.1, 25.2, 26.2., 26.2) of said ring segments (5.1, 5.2) are oriented at an angle relative to a theoretical connecting line between the axis of symmetry of said friction ring R_{S} and the external periphery of said friction ring (4, 4.2, 4.3).

20. Brake disc (1) according to any of the Claims 12 to 19, **characterised in that** means are provided in said severance gap (28) between the mutually facing surfaces on said terminal sections (25.1, 25.2, 26.1, 26.2) of said ring segments (5.1, 5.2) disposed to be adjacent to each other along the peripheral direction, for avoiding a relative movement of said ring segments (5.1, 5.2) along the radial direction.

21. Brake disc (1) according to Claim 20, **characterised in** t hat s aid m eans comprise at least one spacer disc (29) disposed in said severance gap (28).

22. Brake disc (1) according to Claim 20, **characterised in that** said means comprise at least one adjusting screw (29) extending at least into the first, substantially horizontal section of said severance gap (28).

23. Brake disc (1) according to Claim 20, **characterised in that** said means comprise a coulisse (36) between said ring segments (5.1, 5.2) and the elements connected thereto.

24. Brake disc (1) according to Claim 20, **characterised in that** said means are constituted by said connector means (14, 14.1, 14.2, 15, 15.1, 15.2, 15.3.1, 15.3.2, 15.4.1, 15.4.2).

25. Brake disc (1) according to any of the Claims 12 to 24, **characterised in that** said connector means (14, 14.1, 14.2, 15, 15.1, 15.2, 15.3.1, 15.3.2, 15.4.1, 15.4.2) are realised in the form of bolts (35).

26. Brake disc (1) according to any of the Claims 12 to 24, **characterised in that** said connector means (14, 14.1, 14.2, 15, 15.1, 15.2, 15.3.1, 15.3.2, 15.4.1, 15.4.2) are realised in the form of screw elements.

27. Brake disc (1) according to any of the Claims 12 to 26, **characterised in that** said severance gap (28) is filled, at least partly, by a metal sheet element (23.1 - 23.4, 30).

## Revendications

1. Procédé à fabriquer un anneau de friction (4, 4.2, 4.3) composé d'au moins deux segments annulaires, c'est-à-dire un premier segment d'anneau (5.1) et d'un deuxième segment d'anneau (5.2), pour un disque de frein (1);
1.1 dans lequel lesdits segments d'anneau sont produits d'un élément de base annulaire monobloc (40) par application d'une technique de tronçonnement mécanique ;
**caractérisé par** les caractéristiques suivantes :
1.2 lesdits segments d'anneau (5.1, 5.2) sont coupés dudit élément de base (40) par application d'une technique de hydro coupe, au joint de séparation (19) étant réalisé d'une telle manière, que les sections finales, l'une en face de l'autre, (25.1, 25.2, 26.1, 26.2) de deux segments d'anneau (5.1, 5.2), l'un contigu à l'autre le long de la direction périphérique, dont l'étendue dans lad irection périphérique dudit anneau de friction (4, 4.2, 4.3) caractérise une zone de joint ou de tronçonnement (6, 7), se trouvent en prise l'un dans l'autre, en formant une fente de séparation (28) ;
1.3 vue le long de la direction périphérique, lesdits segments d'anneau (5.1, 5.2) disposé de façon qu'ils soient contigus l'un à l'autre, sont couplés l'un à l'autre dans ladite zone de joint ou de tronçonnement (6, 7), chacun par au moins un moyen de liaison (14, 14.1, 14.2, 15, 15.1, 15.2, 15.3.1, 15.3.2, 15.4.1, 15.4.2).

2. Procédé selon la revendication 1, **caractérisé en ce qu'**avant le tronçonnement desdits segments d'anneau (5.1, 5.2), ledit élément de base (40) est soumis à un traitement de finition en vue de son état de surface.

3. Procédé selon une quelconque des revendications 1 ou 2, **caractérisé en ce que** ledit moyen de liaison (14, 14.1, 14.2, 15, 15.1, 15.2, 15.4.1, 15.4.2) dans ladite zone de joint ou de tronçonnement (6, 7) est passé au travers au moins une zone partielle respective desdites sections finales (15.1, 25.2, 26.1, 26.2) de l'étendue desdits segments d'anneau (5.1, 5.2) disposés de façon qu'ils soient contigus l'un à l'autre, en sens radial.

4. Procédé selon la revendication 3, **caractérisé en ce que** lesdits éléments de fixation (15.3.1, 15.3.2) sont passés à un angle relatif à une ligne de liaison théorique entre l'axe de symétrie dudit anneau de friction (4) et la périphérie extérieure dudit anneau de friction (4, 4.2, 4.3).

5. Procédé selon une quelconque des revendications 3 ou 4, **caractérisé en ce que** ledit élément de base (40) est réalisé sous forme renforcée en vue de l'épaisseur du matériau dans ladite zone de joint ou de tronçonnements (6, 7) à former moyennant lesdits segments d'anneau (5.1, 5.2) en l'état tronçonné.

6. Procédé selon une quelconque des revendications 3 à 5, **caractérisé en ce que** lesdits moyens de liaison (14, 14.1, 14.2, 15, 15.1, 15.2, 15.3.1, 15.3.2, 15.4.1, 15.4.2) sont guidés dans des évidements ou trous de passage (20.1, 20.2, 20.1.1., 20.1.2, 20.4.1, 20.4.2) formés dans les sections finales (25.1, 25.2, 26.2, 26.2) desdits segments d'anneau (5.1, 5.2).

7. Procédé selon la revendication 6, **caractérisé en ce que** lesdits évidements ou trous de passage (20.1, 20.2, 20.1.1, 20.1.2, 20.4.1, 20.4.2) sont formés dans ladite zone de joint ou de tronçonnement (6, 7) à former en état non tronçonné dudit élément de base (40).

8. Procédé selon une quelconque des revendications 1 à 7, **caractérisé en ce que** ledit joint de séparation (19) est réalisé audit élément de base (40) d'une telle manière, que les segments d'anneau (5.1, 5.2), disposés d'une manière qu'ils soient contigus l'un à l'autre le long de la direction périphérique, soient munis des évidements (17, 17.1.1, 17.1.2, 17.2.1, 17.2.2) et bosses (16, 16.1.1, 16.1.2, 16.2.1, 16.2.2) dans lesdites sections finales (25.1, 26.1, 25.2., 26.1), l'une en face de l'autre, dont chacun est configuré de façon à être complémentaire à l'autre en considération de ladite fente de séparation (29), aux écarts et dimensions desdites bosses (16, 16.1.1, 16.1.2, 16.2.1, 16.2.2) et desdits évidements (17, 17.1.1, 17.1.2, 17.2.1, 17.2.2) étant respectivement choisi de manière, qu'ils soient constants.

9. Procédé selon une quelconque des revendications 1 à 7, **caractérisé en ce que** ledit joint de séparation (19) est réalisé audit élément de base (40) non tronçonné d'une telle manière, que lesdits segments d'anneau (5.1, 5.2), disposés de façon qu'ils soient contigus l'un à l'autre le long de la direction périphériques, soient munis des évidements (17, 17.1.1, 17.1.2, 17.2.1, 17.2.2) et des bosses (16, 16.1.1, 16.1.2, 16.2.1, 16.2.2) dans lesdites sections finales (25.1, 26.1, 25.2., 26.1), l'une en face de l'autre, dont chacun est configuré d'une façon, qu'ils soient complémentaires l'un à l'autre en considération de ladite fente de séparation (29), aux écarts et dimensions desdites bosses (16, 16.1.1, 16.1.2, 16.2.1, 16.2.2) et desdits évidements (17, 17.1.1, 17.1.2, 17.2.1, 17.2.2) étant variés le long de la direction radiale dudit anneau de friction (4, 4.1.4.2).

10. Procédé selon une quelconque des revendications 1 à 9, **caractérisé en ce que** lesdits segments d'anneau (5.1, 5.2), disposés de façon qu'ils soient contigus l'un à l'autre le long de la direction périphérique. sont couplés l'un à l'autre via une pluralité respective des are moyens de liaison (15.3.1, 15.3.2, 15.4.1, 15.4.2) dans ladite zone de joint ou de tronçonnement (6, 7).

11. Procédé selon une quelconque des revendications 1 à 10, **caractérisé en ce que** des moyens sont disposés à fixer lesdits segments d'anneau (5.1, 5.2) à coupler l'un à l'autre dans leurs positions le long de la direction radiale.

12. Disque de frein (1) comprenant :
12.1 au moins one anneau de friction (4, 4.1, 4.2) apte à être soumis, au moins d'un côté, à l'action d'une mâchoire de frein, qui est divisé en au moins deux segments d'anneau (5.1, 5.2) aptes à être couplés l'un à l'autre dans la zone de leurs sections finales (25.1, 25.2, 26.2, 26.2) ;
**caractérisé par** les caractéristiques suivantes :
12.2 lesdites sections finales (25.1, 25.2, 26.1, 26.2), l'une en face de l'autre, de deux segments d'anneau (5.1, 5.2) disposés de façon qu'ils soient contigus l'un à l'autre le long de la direction périphérique, se trouvent en prise l'une dans l'autre, en formant une fente de séparation (28), et définissent une zone de joint ou respectivement de tronçonnement (6, 7) en vue de leur étendue le long de la direction périphérique dudit anneau de friction (4);
12.3 au moins un élément de fixation (14, 14.1, 14.2, 15, 15.1, 15.2, 15.3.1, 15.3.2, 15.4.1, 15.4.2) est disposé afin de coupler lesdits segments d'anneau (5.1, 5.2) dans ladite zone de joint ou respectivement de tronçonnement (6, 7), qui sont disposés de façon qu'ils soient contigus l'un à l'autre le long de la direction périphérique.

13. Disque de frein (1) selon la revendication 12, **caractérisé en ce que** lesdits segments d'anneau (5.1, 5.2), disposés de façon qu'ils soient contigus l'un à l'autre le long de la direction périphérique, sont munis des évidements (17, 17.1.1, 17.1.2, 17.2.1, 17.2.2) et des bosses (16, 16.1.1, 16.1.2, 16.2.1, 16.2.2) dans lesdites sections finales (25.1, 26.1, 25.2., 26.1), l'une en face de l'autre, auxdits évidements et bosses étant chacun configuré de façon à être complémentaire l'un à l'autre en considération de ladite fente de séparation (29) et étant disposés en alternation.

14. Disque de frein (1) selon la revendication 13, **caractérisé en ce que** les aires définies par lesdits évidements (17, 17.1.1, 17.1.2, 17.2.1, 17.2.2) et lesdites bosses (16, 16.1.1, 16.1.2, 16.2.1, 16.2.2) s'étendent en sens radial, relativement à l'axe de symétrie R_{S} dudit anneau de friction, en position orthogonale sur le dernier.

15. Disque de frein (1) selon la revendication 13 ou 14, **caractérisé en ce que**, vue le long du sens radial dudit anneau de friction (4, 4.1, 4.2), les écarts et dimensions desdites bosses (16, 16.1.1, 16.1.2, 16.2.1, 16.2.2) et desdits évidements (17, 17.1.1, 17.1.2, 17.2.1, 17.2.2) dans les sections finales individuelles (25.1, 25.2, 26.1, 26.2) sont respectivement constants.

16. Disque de frein (1) selon une quelconque des revendications 12 à 15, **caractérisé en ce que** ledit anneau de friction (4, 4.1, 4.2) dans ladite zone de joint ou respectivement de tronçonnement (6, 7), ou lesdits segments d'anneau (5.1, 5.2) dans leur sections finales (25.1, 25.2, 26.1, 26.2) présentent une largeur plus large.

17. Disque de frein (1) selon une quelconque des revendications 12 à 16, **caractérisé par** les caractéristiques suivantes :
17.1 lesdits moyens de liaison (14, 14.1, 14.2, 15, 15.1, 15.2, 15.3.1, 15.3.2, 15.4.1, 15.4.2) sont guidés dans des évidements ou trous de passage (20.1, 20.2, 20.1.1., 20.1.2, 20.4.1, 20.4.2) disposés dans les sections finales (25.1, 25.2, 26.2, 26.2) desdits segments d'anneau (5.1, 5.2) ;
17.2 lesdits moyens de liaison (14, 14.1, 14.2, 15, 15.1, 15.2, 15.3.1, 15.3.2, 15.4.1, 15.4.2) s'étendent sur au moins une partie de l'étendue dudit anneau de friction (4, 4.2, 4.3) le long de la direction radiale.

18. Disque de frein (1) selon la revendication 17, **caractérisé en ce que** lesdits évidements ou trous de passage (20.1, 20.2, 20.4.1, 20.4.2) formés dans lesdites sections finales (25.1, 25.2, 26.2., 26.2) desdits segments d'anneau (5.1, 5.2) sont orientés le long du sens radial relatif à l'axe de symétrie R_{S} dudit anneau de friction.

19. Disque de frein (1) selon la revendication 17, **caractérisé en ce que** lesdits évidements ou trous de passage (20.3.1, 20.3.2) formés dans lesdites sections finales (25.1, 25.2, 26.2., 26.2) desdits segments d'anneau (5.1, 5.2) sont orientés à un angle relatif à une ligne de liaison théorique entre l'axe de symétrie dudit anneau de friction R_{S} et la périphérie extérieure dudit anneau de friction (4, 4.2, 4.3).

20. Disque de frein (1) selon une quelconque des revendications 12 à 19, **caractérisé en ce que** des moyens sont disposés dans ladite fente de séparation (28) entre les surfaces, qui se trouvent en face l'une à l'autre auxdites sections finales (25.1, 25.2, 26.1, 26.2) desdits segments d'anneau (5.1, 5.2) disposés de façon, qu'ils soient contigus l'un à l'autre le long de la direction périphérique, afin d'éviter un mouvement relatif desdits segments d'anneau (5.1, 5.2) le long du sens radial.

21. Disque de frein (1) selon la revendication 20, **caractérisé en ce que** lesdits moyens comprennent au moins un disque écarteur (29) disposé dans ladite fente de séparation (28).

22. Disque de frein (1) selon la revendication 20, c aractérisé en ce que lesdits moyens comprennent au moins une vis de réglage (29), qui s'étend au moins dans la première partie essentiellement horizontale de ladite fente de séparation (28).

23. Disque de frein (1) selon la revendication 20, **caractérisé en ce que** lesdites moyens comprennent un guide coulissant (36) entre lesdits segments d'anneau (5.1, 5.2) et les élément y reliés.

24. Disque de frein (1) selon la revendication 20, **caractérisé en ce que** lesdits moyens sont constitués par lesdits moyens de liaison (14, 14.1, 14.2, 15, 15.1, 15.2, 15.3.1, 15.3.2, 15.4.1, 15.4.2).

25. Disque de frein (1) selon une quelconque des revendications 12 à 24, **caractérisé en ce que** lesdits moyens de liaison (14, 14.1, 14.2, 15, 15.1, 15.2, 15.3.1, 15.3.2, 15.4.1, 15.4.2) sont réalisés sous forme de boulons (35).

26. Disque de frein (1) selon une quelconque des revendications 12 à 24, **caractérisé en ce que** lesdits moyens de liaison (14, 14.1, 14.2, 15, 15.1, 15.2, 15.3.1, 15.3.2, 15.4.1, 15.4.2) sont réalisés sous forme des éléments de vissage.

27. Disque de frein (1 ) selon une quelconque des revendications 12 à 26, **caractérisé en ce que** ladite fente de séparation (28) est remplie, au moins en partie, par un élément en tôle (23.1 - 23.4, 30).
